# EUROPEAN PATENT APPLICATION

(11) **EP 4 059 968 A1**
(43) Date of publication of application: **21.09.2022**
(21) Application number: 20887177.2
(22) Date of filing: 10.11.2020
(51) Int. Cl.: C08F 20/56, C08J 3/02, C08F 2/28, C08F 2/44

(54) **POLYMERIZABLE COMPOSITION, VEHICLE, AND CURED OBJECT AND PRODUCTION METHOD THEREFOR**

(30) Priority: 14.11.2019 JP 2019206257
(71) Applicant: ADEKA CORPORATION, Arakawa-ku Tokyo 116-8554 (JP)
(72) Inventor: HARA, Kenji, Tokyo 116-8554 (JP); NAGASAKA, Kazuteru, Tokyo 116-8554 (JP); IRISAWA, Masatomi, Tokyo 116-8554 (JP); ODA, Yuji, Tokyo 116-8554 (JP)
(74) Representative: Müller Hoffmann & Partner
(86) International application number: PCT/JP2020/041844
(87) International publication number: WO 2021/095711

(57) **Abstract**

A polymerizable composition includes a water-soluble monofunctional acrylamide compound, a water-soluble photoradical initiator, a water-soluble photosensitizer, and an aqueous solvent.

## Description

### Technical Field

The present invention relates to a polymerizable composition that is photoradically polymerizable, a vehicle using the polymerizable composition, a cured material that is a cured product of the polymerizable composition, and a method of manufacturing the cured material.

### Background Art

A polymerizable composition that is curable by utilizing a photoradical polymerization reaction is used in various fields, including inks, paints, colored coating agents, etc. A cured material that is a cured product of the polymerizable composition is also used in various fields in a similar manner. Accordingly, a composition of the polymerizable composition has been considered in various ways.

Specifically, in order to achieve both easy removal and little cure shrinkage, in a polymerizable composition (a radiation-curable composition) including a monofunctional (meth) acrylamide compound, a (meth) acrylate oligomer, and a photopolymerization initiator, an appropriate range of each of SP values and contents is defined (see, for example, PTL 1). In order to achieve curing with use of low dose light-emitting diode light (ultraviolet light), an appropriate pH range is defined in a polymerizable composition (a coating composition) including a water-soluble or water-dispersible polymer, a photoinitiator, a tertiary amine synergist, and water (see, for example, PTL 2). In order to achieve both a soluble property with respect to a stripping solution and resistance with respect to an etching solution, proposed is a polymerizable composition (a ultraviolet curable composition for an ink-jet etching resist) including a (meth) acrylamide compound that is able to form a homopolymer dissolvable in water, a (meth) acrylamide compound that is able to form a homopolymer non-dissolvable in water, a photopolymerization initiator, and a carboxyl-group-containing compound (see, for example, PTL 3).

### Citation List

### Patent Literature

PTL 1: Japanese Unexamined Patent Application Publication No. 2019-001865
PTL 2: Japanese Unexamined Patent Application Publication (Published Japanese Translation of PCT Application) No. JP2017-524750
PTL 3: Japanese Unexamined Patent Application Publication No. 2016-191010

### Summary of the Invention

Although consideration has been actively given regarding a composition of a polymerizable composition, the polymerizable composition does not have a sufficient physical property yet. In addition, as possible uses of the polymerizable composition, a vehicle and a cured material, which is a cured product of the polymerizable composition, each do not have a sufficient physical property yet. This still leaves room for improvement.

It is an object of the present invention to provide a polymerizable composition, a vehicle, a cured material, and a method of manufacturing the cured material that make it possible to achieve a superior physical property.

A polymerizable composition according to one embodiment of the present invention includes a water-soluble monofunctional acrylamide compound, a water-soluble photoradical initiator, a water-soluble photosensitizer, and an aqueous solvent.

A vehicle according to one embodiment of the present invention includes a polymerizable composition, and the polymerizable composition has a configuration similar to that of the polymerizable composition according to the embodiment of the present invention described above.

A cured material according to one embodiment of the present invention is a cured product of a polymerizable composition, and the polymerizable composition has a configuration similar to that of the polymerizable composition of the embodiment of the present invention described above.

A method of manufacturing a cured material according to one embodiment of the present invention includes irradiating a polymerizable composition with an active energy ray, and the polymerizable composition has a configuration similar to that of the polymerizable composition of the embodiment of the present invention described above.

According to the polymerizable composition, the vehicle, or the cured material according to the embodiment of the present invention, the polymerizable composition includes the water-soluble monofunctional acrylamide compound, the water-soluble photoradical initiator, and the water-soluble photosensitizer, and it is therefore possible to obtain a superior physical property.

Further, according to the method of manufacturing a cured material according to the embodiment of the present invention, the above-described polymerizable composition is irradiated with the active energy ray, and it is therefore possible to obtain a cured material having a superior physical property.

### Modes for Carrying Out the Invention

Some embodiments of the present invention are described below in detail. The description is given in the following order. Note that details of the present invention are not limited to examples described below and are appropriately modifiable.

1. Polymerizable Composition
2. Cured Material and Method of Manufacturing Cured Material
3. Uses (Vehicle, etc.)

### <1. Polymerizable Composition>

A description is given first of a polymerizable composition according to one embodiment of the present invention.

### [Configuration]

The polymerizable composition includes a water-soluble monofunctional acrylamide compound, a water-soluble photoradical initiator, a water-soluble photosensitizer, and an aqueous solvent. Hereinafter, "a water-soluble monofunctional acrylamide compound, a water-soluble photoradical initiator, and a water-soluble photosensitizer" are simply referred to as "a monofunctional acrylamide compound, a photoradical initiator, and a photosensitizer", respectively, for convenience.

The polymerizable composition described here is applicable to uses in in various fields typified by a vehicle and the like to be described later. In the above-described uses in various fields, the polymerizable composition is applied on a surface of any of various bases, and is thereby used for forming a film on the surface of the base. As will be described later, the film includes a cured material that is a polymerized (cured) product of the polymerizable composition, and a polymerization reaction utilized for obtaining the cured material is a so-called photoradical polymerization reaction.

### (Monofunctional Acrylamide Compound)

The term "monofunctional acrylamide compound" is a generic term for compounds that are each a water-soluble component (a component which dissolves by 0.1 mass% or more in water at 25°C) that is subjected to a polymerization reaction to obtain a cured material and has one acrylamide group (CH₂=CH-C(=O)-N<). Note that only one kind of the monofunctional acrylamide compound may be used, or two or more kinds of the monofunctional acrylamide compounds may be used.

A soluble property (a solubility) of the monofunctional acrylamide compound in the aqueous solvent is not particularly limited. In particular, the solubility is preferably 0.5 mass% or higher, more preferably 1.0 mass% or higher, and still more preferably 5.0 mass% or higher in water at 25°C. A reason for this is that this improves storage stability of the polymerizable composition, and therefore helps to prevent over-time sedimentation and precipitation of a solid content in the polymerizable composition. Another reason for this is that this improves curability of the polymerizable composition.

The monofunctional acrylamide compound is not particularly limited to a specific kind as long as it is a water-soluble compound having one acrylamide group. In particular, the monofunctional acrylamide compound preferably includes one or more of compounds represented by Formula (1). A reason for this is: that this improves coatability of the polymerizable composition and therefore makes it easier for the polymerizable composition to be applied uniformly on a surface of a base; and that this improves the curability of the polymerizable composition and therefore makes it easier for the polymerizable composition to be sufficiently cured. In addition, in a case where the polymerizable composition includes a colorant (a solid content) such as a pigment to be described later, dispersibility of the solid content in the polymerizable composition is improved, and it is therefore easier for the solid content to be dispersed uniformly in the polymerizable composition. 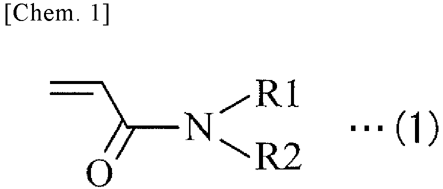 where:
each of R1 and R2 is one of a hydrogen group, a straight-chain alkyl group having carbon number of greater than or equal to 1 and less than or equal to 10, a branched alkyl group having carbon number of greater than or equal to 3 and less than or equal to 10, or a hydroxyalkyl group having carbon number of greater than or equal to 1 and
less than or equal to 10; R1 and R2 are bondable to each other; and each of at least one methylene group in each of R1 and R2 is substitutable by one of -O- or -S-.

### (Details of R1 and R2)

The term "straight-chain alkyl group" is a generic term for: monovalent hydrocarbon groups each including one carbon atom; and monovalent hydrocarbon groups in each which two or more carbon atoms are bonded to each other to form a straight chain structure. The straight-chain alkyl group has carbon number from 1 to 8 both inclusive, and specific examples thereof therefore include a methyl group, an ethyl group, a propyl group, a butyl group, a pentyl group, a hexyl group, a heptyl group, and an octyl group. The propyl group is a so-called n-propyl group, and what has been described here in relation to the propyl group is similarly applicable to the other groups, i.e., the butyl group and the like.

The term "branched alkyl group" is a generic term for monovalent hydrocarbon groups in each which two or more carbon atoms are bonded to each other to form one or more side chains. The branched alkyl group has carbon number from 3 to 8 both inclusive, and specific examples thereof therefore include a propyl group, a butyl group, a pentyl group, a hexyl group, a heptyl group, and an octyl group. The butyl group is one of a so-called sec-butyl group, a so-called isobutyl group, or a so-called tert-butyl group, and what has been described here in relation to the butyl group is similarly applicable to the other groups, i.e., the pentyl group and the like.

The term "hydroxyalkyl group" is a generic term for monovalent groups in each which a hydroxyl group and a straight-chain or branched alkyl group are bonded to each other. Details of the straight-chain or branched alkyl group are as described above. The hydroxyalkyl group has carbon number from 1 to 8 both inclusive, and specific examples thereof therefore include a hydroxymethyl group, a hydroxyethyl group, a hydroxypropyl group, a hydroxybutyl group, a hydroxypentyl group, a hydroxyhexyl group, a hydroxyheptyl group, and a hydroxyoctyl group.

Note that R1 and R2 may be bonded to each other as described above, to thereby form a ring. Further, each of one or more methylene groups included in each of R1 and R2 may be substituted by one of -O- or -S-.

### (Specific Examples of Monofunctional Acrylamide Compound)

Specific examples of the monofunctional acrylamide compound include respective compounds represented by A1 to A10. However, specific examples of the monofunctional acrylamide compound are not limited to the compounds described here as examples.

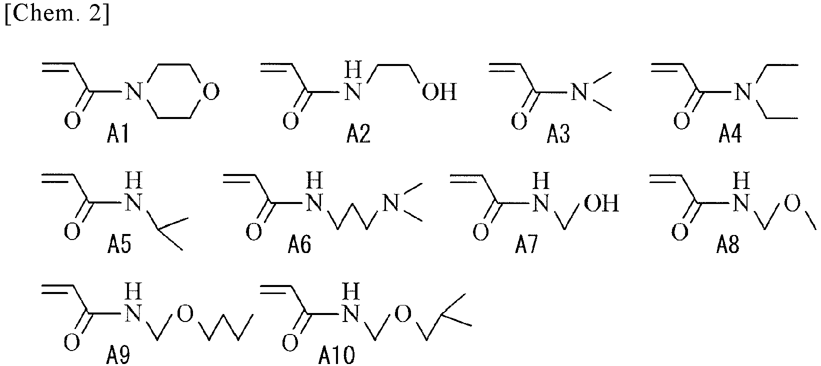

In particular, in the monofunctional acrylamide compound, the sum of the carbon number of R1 and the carbon number of R2 is preferably within a range from 1 to 20 both inclusive, and is more preferably within a range from 1 to 10 both inclusive. Further, in the monofunctional acrylamide compound, it is preferable that R1 and R2 be bonded to each other to form a ring, and the monofunctional acrylamide compound therefore include a heterocycle including a nitrogen atom as a constituent atom. A reason for this is that this further improves the coatability and the curability of the polymerizable composition, and further improves the dispersibility of the solid content in the polymerizable composition.

In particular, the monofunctional acrylamide compound is preferably a compound represented by A1 (4-acryloylmorpholine). A reason for this is that this still further improves the coatability and the curability of the polymerizable composition, and still further improves the dispersibility of the solid content in the polymerizable composition.

### (Content of Monofunctional Acrylamide Compound)

A content of the monofunctional acrylamide compound in the polymerizable composition is not particularly limited. In particular, the content of the monofunctional acrylamide compound is preferably within a range from 60 mass% to 95 mass% both inclusive, and more preferably within a range from 70 mass% to 90 mass% both inclusive. A reason for this is that this improves a property such as the coatability of the polymerizable composition and therefore makes it easier for the polymerizable composition to be applied on the surface of the base. A reason other than the above is that in a case where the polymerizable composition is used as an ink composition for ink jet, this improves a discharge property of an ink including the ink composition.

Note that the above-described "content of the monofunctional acrylamide compound" refers to a ratio of the mass of the monofunctional acrylamide compound to a value obtained by subtracting the mass of a solvent component (here, the aqueous solvent) from the mass of the polymerizable composition. In other words, the content of the monofunctional acrylamide compound is calculated by the following expression: content of monofunctional acrylamide compound (mass%) = [mass of monofunctional acrylamide compound/(mass of polymerizable composition - mass of solvent component)] × 100. The definition regarding the content (mass%) described here is similarly applicable to each of a content of the photoradical initiator, a content of the photosensitizer, a content of the polyfunctional acrylamide compound, and a content of the polyfunctional acrylic acid ester compound which will be described later. Note that the solvent component may include not only the aqueous solvent but also a material such as an organic solvent on an as-needed basis.

### (Photoradical Initiator)

The photoradical initiator is a water-soluble component (a component which dissolves by 0.1 mass% or more in water at 25°C) that initiates a photoradical polymerization reaction of the polymerizable composition. Note that only one kind of the photoradical initiator may be used, or two or more kinds of the photoradical initiators may be used.

In particular, a soluble property (a solubility) of the photoradical initiator in water is preferably 1 mass% or higher, and more preferably 5 mass% or higher in water at 25°C. A reason for this is that this improves the storage stability of the polymerizable composition and therefore helps to prevent the over-time sedimentation and precipitation of the solid content in the polymerizable composition. Another reason for this is that this improves the curability of the polymerizable composition.

In a case of measuring the solubility of the photoradical initiator, performed are the followings. First, in an environment having a temperature of 25°C and a relative humidity (RH) of 65%, the photoradical initiator is added into ion-exchanged water (100 g) by 0.1 g at a time, while the ion-exchanged water is stirred with use of a stirrer. The photoradical initiator is thereby dissolved. Thereafter, while adding the photoradical initiator into the ion-exchanged water, the amount of the added photoradical initiator (the mass of the photoradical initiator) at a time when the photoradical initiator stops being dissolved is identified. In this case, it is determined that the photoradical initiator stops being dissolved when any of floatation, sedimentation, precipitation, white turbidity, and the like of the photoradical initiator occurs. Lastly, the ratio of the mass of the photoradical initiator to the mass of the ion-exchanged water is calculated, and the calculated ratio is determined as the solubility of the photoradical initiator.

The procedure for measuring the solubility of the photoradical initiator described here is also applicable to a procedure for measuring the solubility of a component other than the photoradical initiator.

The photoradical initiator is not particularly limited in specific kind as long as it is a water-soluble compound that initiates the polymerization reaction of the polymerizable composition. In particular, the photoradical initiator preferably includes one or more of compounds represented by Formula (2). A reason for this is that this ensures the storage stability and the curability of the polymerizable composition. 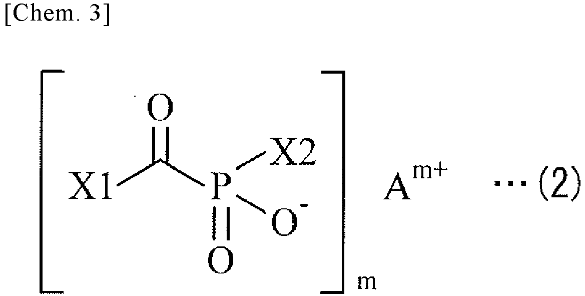 where:
X1 is an aryl group having carbon number of greater than or equal to 6 and less than or equal to 15; each of at least one hydrogen group in the aryl group is substitutable by one of a straight-chain alkyl group having carbon number of greater than or equal to 1 and less than or equal to 8, a branched alkyl group having carbon number of greater than or equal to 3 and less than or equal to 8, a straight-chain halogenated alkyl group having carbon number of greater than or equal to 1 and less than or equal to 8, a branched halogenated alkyl group having carbon number of greater than or equal to 3 and less than or equal to 8, a straight-chain alkoxy group having carbon number of greater than or equal to 1 and less than or equal to 8, a branched alkoxy group having carbon number of greater than or equal to 3 and less than or equal to 8, a straight-chain halogenated alkoxy group having carbon number of greater than or equal to 1 and less than or equal to 8, or a branched halogenated alkoxy group having carbon number of greater than or equal to 3 and less than or equal to 8;
X2 is one of a straight-chain alkyl group having carbon number of greater than or equal to 1 and less than or equal to 8, a branched alkyl group having carbon number of greater than or equal to 3 and less than or equal to 8, a straight-chain alkoxy group having carbon number of greater than or equal to 1 and less than or equal to 8, a branched alkoxy group having carbon number of greater than or equal to 3 and less than or equal to 8, or an aryl group having carbon number of greater than or equal to 6 and less than or equal to 15; each of at least one hydrogen group in the aryl group is substitutable by one of a straight-chain alkyl group having carbon number of greater than or equal to 1 and less than or equal to 8, a branched alkyl group having carbon number of greater than or equal to 3 and less than or equal to 8, a straight-chain halogenated alkyl group having carbon number of greater than or equal to 1 and less than or equal to 8, a branched halogenated alkyl group having carbon number of greater than or equal to 3 and less than or equal to 8, a straight-chain alkoxy group having carbon number of greater than or equal to 1 and less than or equal to 8, a branched alkoxy group having carbon number of greater than or equal to 3 and less than or equal to 8, a straight-chain halogenated alkoxy group having carbon number of greater than or equal to 1 and less than or equal to 8, a branched halogenated alkoxy group having carbon number of greater than or equal to 3 and less than or equal to 8, a halogen group, a nitro group, a cyano group, a hydroxyl group, an amino group, a carboxyl group, a methacryloyl group, an acryloyl group, an epoxy group, a vinyl group, a vinyl ether group, a mercapto group, an isocyanate group, or a heterocycle-containing group; each of at least one methylene group in X2 is substitutable by one of -O- or -S-;
A^{m+} is one of an alkali metal ion, an alkaline earth metal ion, or N⁺HY1Y2Y3; each of Y1, Y2, and Y3 is one of a straight-chain alkyl group having carbon number of greater than or equal to 1 and less than or equal to 6, a straight-chain alkenyl group having carbon number of greater than or equal to 2 and less than or equal to 6, an aryl group having carbon number of greater than or equal to 6 and less than or equal to 15, or an arylalkyl group having carbon number of greater than or equal to 7 and less than or equal to 13; each of at least one hydrogen group in each of Y1, Y2, and Y3 is substitutable by a hydroxyl group; each of at least one methylene group in each of Y1, Y2, and Y3 is substitutable by one of -O- or -N⁺H-; any two of Y1, Y2, and Y3 are bondable to each other; and
m is an integer of greater than or equal to 1 and less than or equal to 3.

The compound represented by Formula (2) is a compound of a carbonylphosphonic acid type, and includes a cation (A^{m+}) and an anion (X1-C(=O)-P(=O)(-O-)-X2).

### (Details of XI)

The term "aryl group" is a generic term for monovalent groups each including one or more aromatic rings. The aryl group has carbon number from 6 to 15 both inclusive, and specific examples thereof therefore include a phenyl group, a naphthyl group, and an anthracenyl group. Note that in a case where the aryl group includes a substituent to be described later, the carbon number of the aryl group is the total carbon number including carbon number of the substituent. To give an example, the carbon number of a trimethylphenyl group is therefore 9 rather than 6. The definition regarding the carbon number of the aryl group described here is similarly applicable in the followings.

Note that each of one or more hydrogen groups included in the aryl group may be substituted by a substituent. As described above, the substituent described here is one of a straight-chain alkyl group, a branched alkyl group, a straight-chain halogenated alkyl group, a branched halogenated alkyl group, a straight-chain alkoxy group, a branched alkoxy group, a straight-chain halogenated alkoxy group, or a branched halogenated alkoxy group each having carbon number within a specific range.

Details of each of the straight-chain alkyl group and the branched alkyl group are as described above.

The straight-chain halogenated alkyl group is a monovalent group obtained by substituting each of one or more hydrogen groups included in the above-described straight-chain alkyl group by a halogen group. The halogen group is not particularly limited in kind, and examples thereof include a fluorine group, a chlorine group, a bromine group, and an iodine group. Note that the straight-chain halogenated alkyl group may include only one kind of halogen group or may include two or more kinds of halogen groups.

The branched halogenated alkyl group is a monovalent group obtained by substituting each of one or more hydrogen groups included in the above-described branched alkyl group by a halogen group. Details of the halogen group are as described above.

The term "straight-chain alkoxy group" is a generic term for monovalent groups each obtained by bonding -O- to the terminal of the above-described straight-chain alkyl group. The straight-chain alkoxy group has carbon number from 1 to 8 both inclusive, and specific examples thereof therefore include a methoxy group, an ethoxy group, a propoxy group, a butoxy group, a pentoxy group, a hexoxy group, a heptoxy group, and an octoxy group. Note that the propyl group described here is an n-propyl group as described above, and this is similarly applicable to the other groups, i.e., the butyl group and the like.

The term "branched alkoxy group" is a generic term for monovalent groups each obtained by bonding -O- to the terminal of the above-described branched alkyl group. The branched alkoxy group has carbon number from 3 to 8 both inclusive, and specific examples thereof therefore include a propoxy group, a butoxy group, a pentoxy group, a hexoxy group, a heptoxy group, and an octoxy group. Note that the butyl group described here is one of a sec-butyl group, an isobutyl group, or a tert-butyl group, and this is similarly applicable to the other groups, i.e., the pentyl group and the like.

The term "straight-chain halogenated alkoxy group" is a generic term for monovalent groups each obtained by bonding -O- to the terminal of the above-described straight-chain halogenated alkyl group. The straight-chain halogenated alkoxy group has carbon number from 1 to 8 both inclusive, and specific examples thereof therefore include a halogenated methoxy group, a halogenated ethoxy group, a halogenated propoxy group, a halogenated butoxy group, a halogenated pentoxy group, a halogenated hexoxy group, a halogenated heptoxy group, and a halogenated octoxy group. Note that the halogenated propyl group described here is an n-halogenated propyl group as described above, and this is similarly applicable to the other groups, i.e., the halogenated butyl group and the like.

The term "branched halogenated alkoxy group" is a generic term for monovalent groups each obtained by bonding -O- to the terminal of the above-described branched halogenated alkyl group. The branched halogenated alkoxy group has carbon number from 3 to 8 both inclusive, and specific examples thereof therefore include a halogenated propoxy group, a halogenated butoxy group, a halogenated pentoxy group, a halogenated hexoxy group, a halogenated heptoxy group, and a halogenated octoxy group. Note that the halogenated butyl group described here is one of a sec-halogenated butyl group, a halogenated isobutyl group, or a tert-halogenated butyl group, and this is similarly applicable to the other groups, i.e., the halogenated pentyl group and the like.

In particular, X1 is preferably a phenyl group in which a straight-chain alkyl group is introduced at each of positions 2, 4, and 6, and more preferably a phenyl group in which a methyl group is introduced at each of positions 2, 4, and 6 (a 2,4,6-trimethyl-phenyl group). A reason for this is that this further improves the curability of the polymerizable composition.

### (Details of X2)

Details of each of the straight-chain alkyl group, the branched alkyl group, the straight-chain alkoxy group, the branched alkoxy group, and the aryl group are as described above.

Note that as with the case described in relation to XI, each of one or more hydrogen groups included in the aryl group may be substituted by a substituent. The substituent is one of a straight-chain alkyl group, a branched alkyl group, a straight-chain halogenated alkyl group, a branched halogenated alkyl group, a straight-chain alkoxy group, a branched alkoxy group, a straight-chain halogenated alkoxy group, or a branched halogenated alkoxy group each having carbon number within a specific range. Further, the substituent is one of a halogen group, a nitro group, a cyano group, a hydroxyl group, an amino group, a carboxyl group, a methacryloyl group, an acryloyl group, an epoxy group, a vinyl group, a vinyl ether group, a mercapto group, an isocyanate group, or a heterocycle-containing group. Details of the halogen group are as described above.

The term "heterocycle-containing group" is a generic term for: monovalent groups in each which a ring (a heterocycle) is formed by a carbon atom and one or more atoms other than the carbon atom; and monovalent groups each including such a heterocycle. Examples of the atom other than the carbon atom include a nitrogen atom, an oxygen atom, and a sulfur atom. The kind of the heterocycle is not particularly limited, and the number of the heterocycles included in the heterocycle-containing group is not particularly limited. Specific examples of the heterocycle-containing group include a group obtained by removing one hydrogen group from each of thiazole, imidazole, oxazole, pyridine, pyrazinine, pyrimidinine, pyridazinine, thiophene, furan, bithiophene, and terthiophene.

In addition, each of one or more methylene groups included in X2 may be substituted by one of -O- or -S-, as described above.

In particular, X2 is preferably an aryl group having carbon number from 6 to 15 both inclusive, and more preferably a phenyl group. A reason for this is that this further improves the curability of the polymerizable composition.

### (Details of A^{m+})

The alkali metal ion is not particularly limited in kind as long as it is an ion of an element belonging to Group 1 in the long period periodic table. Specific examples of the alkali metal ion include a lithium ion, a sodium ion, a potassium ion, and a rubidium ion.

The alkaline earth metal ion is not particularly limited in kind as long as it is an ion of an element belonging to Group 2 in the long period periodic table. Specific examples of the alkaline earth metal ion include a beryllium ion, a magnesium ion, a calcium ion, a strontium ion, and a barium ion.

Details of each of the straight-chain alkyl group and the aryl group are as described above.

The term "straight-chain alkenyl group" is a generic term for monovalent hydrocarbon groups each including a carbon-carbon double bond (>C=C<) and in each which two or more carbon atoms are bonded to each other to form a straight chain. The straight-chain alkenyl group has carbon number from 2 to 6 both inclusive, and specific examples thereof therefore include a vinyl group, an allyl group, an acrylic group, and a methacrylic group.

The term "arylalkyl group" is a generic term for monovalent groups obtained by bonding an aryl group and a straight-chain or branched alkyl group to each other. Details of the aryl group are as described above, and details of the straight-chain or branched alkyl group are as described above. The hydroxyalkyl group has carbon number from 7 to 13 both inclusive, and specific examples thereof therefore include a hydroxymethyl group, a hydroxyethyl group, a hydroxypropyl group, a hydroxybutyl group, a hydroxypentyl group, a hydroxyhexyl group, a hydroxyheptyl group, a hydroxyoctyl group, a hydroxynonyl group, a hydroxydecyl group, a hydroxyundecyl group, a hydroxydodecyl group, and a hydroxytridecyl group.

Note that each of one or more hydrogen groups included in each of Y1, Y2, and Y3 may be substituted by a hydroxyl group. In addition, each of one or more methylene groups included in each of Y1, Y2, and Y3 may be substituted by one of -O- or -N⁺H-.

Note that any two of Y1, Y2, or Y3 may be bonded to each other to form a ring. In other words, Y1 and Y2 may be bonded to each other, Y1 and Y3 may be bonded to each other, or Y2 and Y3 may be bonded to each other.

In particular, A^{m+} is preferably N⁺HY1Y2Y3 in which each of one or more hydrogen groups included in each of Y1, Y2, and Y3 is substituted by a hydroxyl group. A reason for this is that this improves the solubility of the photoradical initiator and also improves the curability of polymerizable composition.

### (Details of m)

The value of m is a value determined depending on the valence of each of the cation and the anion, and is within a range from 1 to 3 both inclusive, as described above. Among them, the value of m is preferably 1 or 2, and more preferably 1. A reason for this is that this improves the solubility of the photoradical initiator in water.

### (Specific Examples of Photoradical Initiators)

Specific examples of the photoradical initiator are not particularly limited as long as they are water-soluble compounds satisfying the conditions (XI, X2, A, and m) described in Formula (2).

### (Content of Photoradical Initiator)

The content of the photoradical initiator in the polymerizable composition is not particularly limited. The content of the photoradical initiator is preferably within a range from 0.1 mass% to 20 mass% both inclusive, and more preferably within a range from 1 mass% to 10 mass% both inclusive, in particular. A reason for this is that this improves the storage property and the curability of the polymerizable composition.

### (Photosensitizer)

The photosensitizer is a water-soluble component (a component which dissolves by 0.05 mass% or more in water at 25°C) which assists in progress of the photoradical polymerization reaction. Only one kind of the photosensitizer may be used, or two or more kinds of the photosensitizers may be used.

A soluble property (a solubility) of the photosensitizer in the aqueous solvent is not particularly limited. In particular, the solubility is preferably 0.1 mass% or higher, more preferably 0.5 mass% or higher, and still more preferably 1.0 mass% or higher, in water at 25°C. A reason for this is that this improves the storage stability of the polymerizable composition and therefore helps to prevent over-time sedimentation and precipitation of a solid content in the polymerizable composition. Another reason for this is that this improves the curability of the polymerizable composition.

Specific kinds of the photosensitizers are not particularly limited as long as they are water-soluble components which assist in progress of the photoradical polymerization reaction. In particular, the photosensitizer preferably includes one or more of compounds represented by Formula (3). A reason for this is that this improves the photosensitivity of the photosensitizer and improves the solubility and the curability of the polymerizable composition. This allows the photosensitizer to absorb light in a wide wavelength range. In particular, in a case where the polymerizable composition is used as an ink composition for ink jet, this effectively improves curability of an ink including the ink composition. 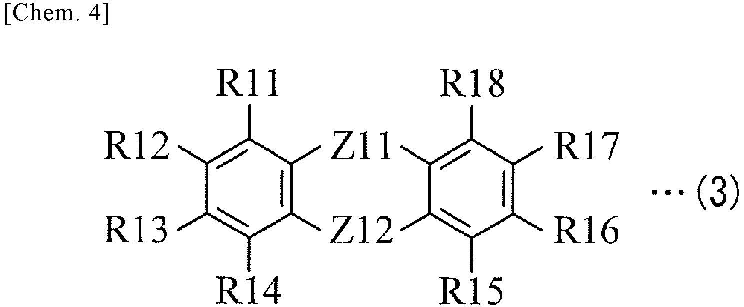 where:
each of R11, R12, R13, R14, R15, R16, R17, and R18 is one of a hydrogen group, a cyano group, a nitro group, a straight-chain alkyl group having carbon number of greater than or equal to 1 and less than or equal to 20, a branched alkyl group having carbon number of greater than or equal to 3 and less than or equal to 20, an aryl group having carbon number of greater than or equal to 6 and less than or equal to 30, an arylalkyl group having carbon number of greater than or equal to 7 and less than or equal to 30, a heterocycle-containing group having carbon number of greater than or equal to 2 and less than or equal to 20, or a salt-forming-group-containing group represented by Formula (4); at least one of R11, R12, R13, R14, R15, R16, R17, or R18 is the salt-forming-group-containing group represented by Formula (4);
Z11 is one of >NR19, -O-, -S-, >S=O, or >C=O; R19 is one of a hydrogen group, a straight-chain alkyl group having carbon number of greater than or equal to 1 and less than or equal to 20, a branched alkyl group having carbon number of greater than or equal to 3 and less than or equal to 20, an aryl group having carbon number of greater than or equal to 6 and less than or equal to 30, an arylalkyl group having carbon number of greater than or equal to 7 and less than or equal to 30, or a heterocycle-containing group having carbon number of greater than or equal to 2 and less than or equal to 20; Z11 is able to be a direct bond;
Z12 is one of >CR20, >NR21, -O-, -S-, >S=O, or >C=O; and each of R20 and R21 is one of a hydrogen group, a straight-chain alkyl group having carbon number of greater than or equal to 1 and less than or equal to 20, a branched alkyl group having carbon number of greater than or equal to 3 and less than or equal to 20, an aryl group having carbon number of greater than or equal to 6 and less than or equal to 30, an arylalkyl group having carbon number of greater than or equal to 7 and less than or equal to 30, or a heterocycle-containing group having carbon number of greater than or equal to 2 and less than or equal to 20. 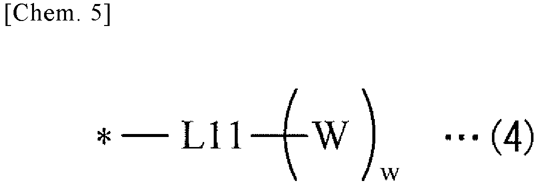
where:
L11 is a (w + 1)-valent bonded group; each of at least one hydrogen group in the (w + 1)-valent bonded group is substitutable by one of a halogen group, a nitro group, a cyano group, a hydroxyl group, an amino group, a carboxyl group, a methacryloyl group, an acryloyl group, an epoxy group, a vinyl group, a vinyl ether group, a mercapto group, an isocyanate group, or a heterocycle-containing group; L11 is able to be a direct bond;
W is one of a salt of an acidic group or a salt of a basic group;
w is an integer of greater than or equal to 1 and less than or equal to 10; and
"^{∗}" represents a dangling bond.

The compound represented by Formula (3) is a compound in which one or more salt-forming-group-containing groups are introduced into a parent having a tricyclic structure including two benzene rings, and is able to absorb light having a wide wavelength range including long-wavelength light. Thus, the polymerizable composition is able to be stable and sufficiently polymerizable (curable) even at depth. Accordingly, so-called deep curability improves.

Such improvement in the deep curability allows the polymerizable composition to be cured more easily even in a case where the coating thickness is great, and also to be cured more easily even in a case where a colorant such as a photocurable ink is included.

Note that the compound represented by Formula (3) has a superior soluble property in water as described above, and therefore, may be used together with a water-soluble resin. A reason for this is that the photosensitizer thereby exhibits superior compatibility with respect to a radically polymerizable compound having a hydrophilic group such as a carboxyl group, a hydroxyl group, an acrylamide group, or an ester group, and the photosensitizer also thereby exhibits superior compatibility with respect to the water-soluble resin.

Details of each of the straight-chain alkyl group, the branched alkyl group, the aryl group, the arylalkyl group, and the heterocycle-containing group are as described above, except that the range of the carbon number is different.

### (Details of R11 to R18)

The straight-chain alkyl group has carbon number from 1 to 20 both inclusive and the branched alkyl group has carbon number from 3 to 20 both inclusive. Specific examples of the straight-chain or branched alkyl group therefore include a methyl group, an ethyl group, a propyl group, an isopropyl group, a butyl group, a sec-butyl group, a tert-butyl group, an isobutyl group, an amyl group, an isoamyl group, a tert-amyl group, a cyclopentyl group, a hexyl group, a 2-hexyl group, a 3-hexyl group, a cyclohexyl group, a 4-methylcyclohexyl group, a heptyl group, a 2-heptyl group, a 3-heptyl group, an isoheptyl group, a tert-heptyl group, a 1-octyl group, an isooctyl group, a tert-octyl group, and an adamantyl group.

The aryl group has carbon number from 6 to 30 both inclusive, and specific examples thereof therefore include a phenyl group, a naphthyl group, and an anthracenyl group.

The arylalkyl group has carbon number from 7 to 30 both inclusive, and specific examples thereof therefore include a benzyl group, a fluorenyl group, an indenyl group, and a 9-fluorenylmethyl group.

The heterocycle-containing group has carbon number from 2 to 20 both inclusive, and specific examples thereof therefore include a pyridyl group, a pyrimidyl group, a pyridazyl group, a piperidyl group, a pyranyl group, a pyrazolyl group, a triazil group, a pyrrolyl group, a quinolyl group, an isoquinolyl group, an imidazolyl group, a benzoimidazolyl group, a triazolyl group, a furyl group, a furanyl group, a benzofuranyl group, a thienyl group, a thiophenyl group, a benzothiophenyl group, a thiadiazolyl group, a thiazolyl group, a benzothiazolyl group, an oxazolyl group, a benzoxazolyl group, an isothiazolyl group, an isoxazolyl group, an indolyl group, a 2-pyrrolidinone-1-yl group, a 2-piperidone-1-yl group, a 2,4-dioxyimidazolidin-3-yl group, and a 2,4-dioxyoxazolidin-3-yl group.

Note that each of one or more hydrogen groups included in each of the straight-chain alkyl group, the branched alkyl group, the aryl group, the arylalkyl group, and the heterocycle-containing group may be substituted by a substituent. The substituent described here is one of an alkenyl group, a halogen group, an acyl group, an acyloxy group, a substituted amino group, a sulfonamide group, a sulfonyl group, a carboxyl group, a cyano group, a sulfo group, a hydroxyl group, a nitro group, a mercapto group, an imide group, a carbamoil group, a sulfonamide group, a phosphonic acid group, or a phosphoric acid group.

Details of each of the alkenyl group and the halogen group are as described above.

Specific examples of the acyl group include an acetyl group, a 2-chloroacetyl group, a propionyl group, an octanoyl group, an acryloyl group, a methacryloyl group, a phenylcarbonyl(benzoyl) group, a phthaloyl group, a 4-trifluoromethylbenzoyl group, a pivaloyl group, a salicyloyl group, an oxaloyl group, a stearoyl group, a methoxycarbonyl group, an ethoxycarbonyl group, a t-butoxycarbonyl group, an n-octadecyloxycarbonyl group, and a carbamoyl group.

Specific examples of the acyloxy group include an acetyloxy group and a benzoyloxy group.

Specific examples of the substituted amino group include an amino group, an ethylamino group, a dimethylamino group, a diethylamino group, a butylamino group, a cyclopentylamino group, a 2-ethylhexylamino group, a dodecylamino group, an anilino group, a chlorophenylamino group, a toluidino group, an anisidino group, an N-methyl-anilino group, a diphenylamino group, a naphthylamino group, a 2-pyridylamino group, a methoxycarbonylamino group, a phenoxycarbonylamino group, an acetylamino group, a benzoylamino group, a formylamino group, a pivaloylamino group, a lauroylamino group, a carbamoylamino group, an N,N-dimethylaminocarbonylamino group, an N,N-diethylaminocarbonylamino group, a morpholinocarbonylamino group, a methoxycarbonylamino group, an ethoxycarbonylamino group, a t-butoxycarbonylamino group, an n-octadecyloxycarbonylamino group, an N-methyl-methoxycarbonylamino group, a phenoxycarbonylamino group, a sulfamoylamino group, an N,N-dimethylaminosulfonylamino group, a methylsulfonylamino group, a butylsulfonylamino group, and a phenylsulfonylamino group.

Any two or more of R11 to R18 may be bonded to each other to form a ring. To give some examples, R11 and R12 adjacent to each other may be formed together, R12 and R13 adjacent to each other may be formed together, R13 and R14 adjacent to each other may be formed together, R15 and R16 adjacent to each other may be formed together, R16 and R17 adjacent to each other may be formed together, or R17 and R18 adjacent to each other may be formed together. In addition, one or more of R11 to R18 may form a fused ring together with the two benzene rings forming a tricyclic structure.

The ring formed by the bonding of R11 and R12 adjacent to each other is not particularly limited in kind. Specific examples of the ring include a cyclopentene ring, a cyclohexene ring, a dihydrofuran ring, a dihydropyran ring, a benzene ring, and a naphthalene ring. The description here regarding the kind of the ring is similarly applicable to other rings formed by the combination of R11 and R12.

Note that because one or more of R11 to R18 are a salt-forming-group-containing group or salt-forming-group-containing groups as described above, the compound represented by Formula (3) includes one or more salt-forming-group-containing groups. A reason for this is that this stabilizes the state of the photosensitizer in the aqueous solvent, and therefore helps to prevent the photosensitizer from being decomposed easily. In this case, the state of the photosensitizer is stabilized not only in the aqueous solvent but also in an organic solvent.

In particular, it is preferable that one or two of R11 to R18 be a salt-forming-group-containing group or salt-forming-group-containing groups, and it is more preferable that one of R11 to R18 be a salt-forming-group-containing group. A reason for this is that this improves the soluble property of the photosensitizer.

It is sufficient that each of the groups other than the salt-forming-group-containing group in R11 to R18 is one of a hydrogen group, a cyano group, a nitro group, a straight-chain alkyl group having carbon number from 1 to 20 both inclusive, a branched alkyl group having carbon number from 3 to 20 both inclusive, an aryl group having carbon number from 6 to 30 both inclusive, an arylalkyl group having carbon number from 7 and 30 both inclusive, or a heterocycle-containing group having carbon number from 2 to 20 both inclusive.

In particular, each of the groups other than the salt-forming-group-containing group is preferably one of a hydrogen group or a straight-chain alkyl group having carbon number from 1 to 10 both inclusive, and is preferably one of a hydrogen group or a straight-chain alkyl group having carbon number from 1 to 5 both inclusive. A reason for this is that this allows for easy synthesis of the photosensitizer and improves the soluble property of the photosensitizer. Another reason for this is that this improves the storage stability of the polymerizable composition.

Further, each of the groups other than the salt-forming-group-containing group is preferably a group that is able to form a conjugated system with a tricyclic structure, and in particular, is preferably one of a nitro group or an aryl group having carbon number from 6 to 30 both inclusive. A reason for this is that this improves efficiency of absorption of light in a long wavelength range by the photosensitizer.

### (Details of L11)

As is apparent from Formula (3) and Formula (4), L11 is a (w + 1)-valent bonded group that is interposed between the tricyclic structure (a carbon atom in the benzene ring) and W to thereby bond the tricyclic structure and W to each other. The (w + 1)-valent bonded group is not particularly limited in kind as long as it is a (w + 1)-valent group that is able to bond the tricyclic structure and W to each other.

Specifically, the (w + 1)-valent bonded group is one of a nitrogen atom, an oxygen atom, a sulfur atom, a phosphorous atom, a group represented by ^{∗}-O-P(=O)(-O-^{∗})₂, a group represented by ^{∗}-O-P(-O-^{∗})₂, >C=O-, -NH-CO-, -CO-NH-, >NR22, a (w + 1)-valent aliphatic hydrocarbon group having carbon number from 1 to 120 both inclusive, a (w + 1)-valent cyclic aromatic hydrocarbon group having carbon number from 6 to 35 both inclusive, or a (w + 1)-valent heterocycle-containing group having carbon number from 2 to 35 both inclusive. Note that R22 is one of a hydrogen group, a monovalent aliphatic hydrocarbon group having carbon number from 1 to 120 both inclusive, a monovalent cyclic aromatic hydrocarbon group having carbon number from 6 to 35 both inclusive, or a monovalent heterocycle-containing group having carbon number from 2 to 35 both inclusive. The asterisk (^{∗}) represents a dangling bond.

Note that each of one or more methylene groups included in each of the (w + 1)-valent aliphatic hydrocarbon group, the (w + 1)-valent cyclic aromatic hydrocarbon group, and the (w + 1)-valent heterocycle-containing group may be substituted by one of -O-, -S-, -CO-, -O-CO-, -CO-O-, -O-CO-O-, -O-CO-O-, -S-CO-, -CO-S-, -S-CO-O-, -O-CO-S-, -CO-NH-, -NH-CO-, -NH-CO-O-, -NH-CO-O-, -NR'-, -S-S-, -SO₂-, or -NH-. Note that R' is one of a hydrogen group or an alkyl group having carbon number from 1 to 8 both inclusive. This is similarly applicable in the following. In addition, each of one or more hydrogen groups included in the above-described methylene group may be substituted by a hydroxyl group. Further, an aromatic ring included in the monovalent cyclic aromatic hydrocarbon group may be fused with another ring. A heterocycle included in the heterocycle-containing group may be fused with another ring.

In a case where L11 is one of a nitrogen atom, a phosphorus atom, the group represented by ^{∗}-O-P(=O)(-O-^{∗})₂, or the group represented by ^{∗}-O-P(-O-^{∗})₂, the value of (w + 1) is 3. In a case where L11 is one of an oxygen atom, a sulfur atom, >C=O-, -NH-CO-, -CO-NH-, or >NR22, the value of (w + 1) is 2.

Specific examples of the monovalent aliphatic hydrocarbon group having carbon number from 1 to 120 both inclusive include an alkyl group, an alkoxy group, an alkylthio group, and an alkenyl group. These groups may each be substituted by one or more of the above-described series of substituents.

Specific examples of the alkyl group include a methyl group, an ethyl group, a propyl group, an isopropyl group, a cyclopropyl group, a butyl group, a secondary butyl group, a tertiary butyl group, an isobutyl group, an amyl group, an isoamyl group, a tertiary amyl group, a cyclopentyl group, a hexyl group, a 2-hexyl group, a 3-hexyl group, a cyclohexyl group, a bicyclohexyl group, a 1-methylcyclohexyl group, a heptyl group, a 2-heptyl group, a 3-heptyl group, an isoheptyl group, a tertiary heptyl group, an n-octyl group, an isooctyl group, a tertiary octyl group, a 2-ethylhexyl group, a nonyl group, an isononyl group, and a decyl group.

Specific examples of the alkoxy group include a methyloxy group, an ethyloxy group, a propyloxy group, an isopropyloxy group, a butyloxy group, a secondary butyloxy group, a tertiary butyloxy group, an isobutyloxy group, an amyloxy group, an isoamyloxy group, a tertiary amyloxy group, a hexyloxy group, a cyclohexyloxy group, a heptyloxy group, an isoheptyloxy group, a tertiary heptyloxy group, an n-octyloxy group, an isooctyloxy group, a tertiary octyloxy group, a 2-ethylhexyloxy group, a nonyloxy group, and a decyloxy group.

Specific examples of the alkylthio group include a methylthio group, an ethylthio group, a propylthio group, an isopropylthio group, a butylthio group, a secondary butylthio group, a tertiary butylthio group, an isobutylthio group, an amylthio group, an isoamylthio group, a tertiary amylthio group, a hexylthio group, a cyclohexylthio group, a heptylthio group, an isoheptylthio group, a tertiary heptylthio group, an n-octylthio group, an isooctylthio group, a tertiary octylthio group, and a 2-ethylhexylthio group.

Specific examples of the alkenyl group include a vinyl group, a 1-methylethenyl group, a 2-methylethenyl group, a 2-propenyl group, a 1-methyl-3-propenyl group, a 3-butenyl group, a 1-methyl-3-butenyl group, an isobutenyl group, a 3-pentenyl group, a 4-hexenyl group, a cyclohexenyl group, a bicyclohexenyl group, a heptenyl group, an octenyl group, a decenyl group, a pentadecenyl group, an eicosenyl group, and a tricosenyl group.

Specific examples of the monovalent cyclic aromatic hydrocarbon group having carbon number from 6 to 35 both inclusive include an arylalkyl group, an aryl group, an aryloxy group, and an arylthio group. These groups may each be substituted by one or more of the above-described series of substituents.

Specific examples of the arylalkyl group include a benzyl group, a phenethyl group, a diphenylmethyl group, a triphenylmethyl group, a styryl group, and a cinnamyl group. Specific examples of the aryl group include a phenyl group and a naphthyl group. Specific examples of the aryloxy group include a phenoxy group and a naphthyloxy group. Specific examples of the arylthio group include phenylthio and naphthylthio.

Specific examples of the monovalent heterocycle-containing group having carbon number from 2 to 35 both inclusive include a pyridyl group, a pyrimidyl group, a pyridazyl group, a piperidyl group, a pyranyl group, a pyrazolyl group, a triazil group, a pyrrolyl group, a quinolyl group, an isoquinolyl group, an imidazolyl group, a benzoimidazolyl group, a triazolyl group, a furyl group, a furanyl group, a benzofuranyl group, a thienyl group, a thiophenyl group, a benzothiophenyl group, a thiadiazolyl group, a thiazolyl group, a benzothiazolyl group, an oxazolyl group, a benzoxazolyl group, an isothiazolyl group, an isoxazolyl group, an indolyl group, a 2-pyrrolidinone-1-yl group, a 2-piperidone-1-yl group, a 2,4-dioxyimidazolidine-3-yl group, a 2,4-dioxyoxazolidine-3-yl group, and a benzotriazoyl group.

The structure of the monovalent aliphatic hydrocarbon group having carbon number from 1 to 120 both inclusive is not particularly limited, and may therefore be a straight chain structure, a branched structure, a cyclic structure (alicyclic hydrocarbon), or a state in which two or more thereof are bonded to each other.

Each of one or more methylene groups included in the monovalent aliphatic hydrocarbon group may be substituted by -O-, -S-, -CO-, -O-CO-, -CO-O-, -O-CO-O-, -O-CO-O-, -S-CO-, -CO-S-, -S-CO-O-, -O-CO-S-, -CO-NH-, -NH-CO-, -NHCO-O-, -NH-CO-O-, -NR'-, -S-S-, -SO₂-, or -NH-.

Specific examples of the (w + 1)-valent aliphatic hydrocarbon group having carbon number from 1 to 120 both inclusive in a case where the valence of (w + 1) is divalent or more include a group obtained by removing w-number of hydrogen group or hydrogen groups from the monovalent aliphatic hydrocarbon group having carbon number from 1 to 120 both inclusive.

Specific examples of the (w + 1)-valent aliphatic hydrocarbon group having carbon number from 1 to 120 both inclusive in a case where the valence of (w + 1) is divalent include an alkylene group, a substituted alkylene group, a diol residue, and a dithiol residue. These groups may each be substituted by one or more of the above-described series of substituents.

Specific examples of the alkylene group include a methylene group, an ethylene group, a propylene group, a butylene group, and a butyldiyl group. Specific examples of the substituted alkylene group include a group obtained by substituting each of one or more methylene groups included in the alkylene group described above by -O-, -S-, -CO-O-, -O-CO-, or the like. Specific examples of the diol residue include an ethanediol group, a propanediol group, a butanediol group, a pentanediol group, and a hexanediol group. Specific examples of the dithiol residue include an ethanedithiol group, a propanedithiol group, a butanedithiol group, a pentanedithiol group, and a hexanedithiol group.

Specific examples of the (w + 1)-valent aliphatic hydrocarbon group having carbon number from 1 to 120 both inclusive in a case where the valence of (w + 1) is trivalent include an alkylidine group such as a propylidine group or a 1,1,3-butylidine group. These groups may each be substituted by one or more of the above-described series of substituents.

The structure of the (w + 1)-valent cyclic aromatic hydrocarbon group having carbon number from 6 to 35 both inclusive may be freely set. Note that each of one or more methylene groups included in the (w + 1)-valent cyclic aromatic hydrocarbon group may be substituted by -O-, -S-, -CO-, -O-CO-, -CO-O-, -O-CO-O-, -O-CO-O-, -S-CO-, -CO-S-, -S-CO-O-, -O-CO-S-, -CO-NH-, -NH-CO-, -NH-CO-O-, -NH-CO-O-, -NR'-, -S-S-, -SO₂-, or -NH-.

Specific examples of the (w + 1)-valent cyclic aromatic hydrocarbon group having carbon number from 6 to 35 both inclusive in a case where the valence of (w + 1) is divalent or more include a group obtained by removing w-number of hydrogen group or hydrogen groups from the monovalent cyclic aromatic hydrocarbon group having carbon number from 6 to 35 both inclusive.

Specific examples of the (w + 1)-valent cyclic aromatic hydrocarbon group having carbon number from 6 to 35 both inclusive in a case where the valence of (w + 1) is divalent include an arylene group, a bifunctional phenol residue, and a 2,4,8,10-tetraoxaspiro[5,5]undecane group. These groups may each be substituted by a substituent to be described later. Specific examples of the arylene group include a phenylene group and a naphthylene group. Specific examples of the bifunctional phenol residue include a catechol group and a bisphenol group.

Specific examples of the (w + 1)-valent cyclic aromatic hydrocarbon group having carbon number from 6 to 35 both inclusive in a case where the valence of (w + 1) is trivalent include a phenyl-1,3,5-trimethylene group. These groups may each be substituted by one or more of the above-described series of substituents.

The structure of the (w + 1)-valent heterocycle-containing group having carbon number from 2 to 35 both inclusive may be freely set.

Note that each of one or more methylene groups included in the (w + 1)-valent heterocycle-containing group may be substituted by -O-, -S-, -CO-, -O-CO-, -CO-O-, -O-CO-O-, -O-CO-O-, -S-CO-, -CO-S-, -S-CO-O-, -O-CO-S-, -CO-NH-, -NH-CO-, -NHCO-O-, -NH-CO-O-, -NR'-, -S-S-, -SO₂-, or -NH-.

Specific examples of the (w + 1)-valent heterocycle-containing group having carbon number from 2 to 35 both inclusive in a case where the valence of (w + 1) is divalent or more include a group obtained by removing w-number of hydrogen group or hydrogen groups from the monovalent heterocycle-containing group having carbon number from 2 to 35 both inclusive.

Specific examples of the (w + 1)-valent heterocycle-containing group having carbon number from 2 to 35 both inclusive in a case where the valence of (w + 1) is divalent include respective groups including a pyridine ring, a pyrimidine ring, a piperidine ring, a piperazine ring, a triazine ring, a furan ring, a thiophene ring, and an indole ring.

Specific examples of the (w + 1)-valent heterocycle-containing group having carbon number from 2 to 35 both inclusive in a case where the valence of (w + 1) is trivalent include respective groups including an isocyanuric ring and a triazine ring.

Note that L11 may be a direct bond. This direct bond refers to that L11 is absent and the salt-forming-group-containing group is represented by -(W)_{w}.

### (Details of W)

W may be a salt of an acidic group or a salt of a basic group, as described above. In particular, W is preferably the salt of the acidic group. A reason for this is that this improves photosensitivity of the photosensitizer.

The salt of the acidic group includes an anionic group bonded to L11, and a cation component that is able to form a salt with the anionic group. The salt of the basic group includes a cationic group bonded to L11, and an anion component that is able to form a salt with the cationic group. The valence of the anionic group or the anion component included in the salt-forming-group-containing group and the valence of the cationic group or the cation component included in the salt-forming-group-containing group are the same as each other. Note that the valence of the anionic group or the anion component may be monovalent, or may be divalent or more. Similarly, the valence of the cationic group or the cation component may be monovalent, or may be divalent or more.

### (Details of Salt of Acidic Group)

Details of the salt of the acidic group are as follows. The anionic group included in the salt of the acidic group is not particularly limited in kind as long as it is possible to secure the photosensitivity and the soluble property of the photosensitizer. Specifically, specific examples of the anionic group include a phosphoric acid ion group, a carboxylic acid ion group, a sulfonic acid ion group, a phosphoric acid ester ion group, a sulfuric acid ester ion group, a nitric acid ester ion group, a phosphorous acid ion group, a phosphonic acid ion group, a phosphinic acid ion group, and a sulfinic acid ion group. Among them, the anionic group is preferably one of a carboxylic acid ionic group or a sulfonic acid ionic group, and more preferably a carboxylic acid ionic group.

The cation component that is able to form a salt with the above-described anionic group is not particularly limited as long as it is possible to secure the photosensitivity and the soluble property of the photosensitizer. Specific examples of the cation component may include an inorganic ion and an organic ion.

Examples of the inorganic ion include an alkali metal ion and an alkaline earth metal ion. Examples of the organic ion include an amine-based cation, a tertiary sulfonium cation, a tertiary oxonium cation, a quaternary phosphonium cation, and a tertiary carbocation.

Among them, the cation component is preferably one of an alkali metal ion, an alkaline earth metal ion, or an amine-based cation, and more preferably one of an alkali metal ion or an amine-based cation. A reason for this is that this allows for easy synthesis of the photosensitizer. Another reason for this is that this secures the soluble property of the photosensitizer and improves the storage stability of the polymerizable composition.

Specific examples of the alkali metal ion include a lithium ion, a sodium ion, a potassium ion, a rubidium ion, and a cesium ion. Among them, the alkali metal ion is preferably a potassium ion. A reason for this is that this improves the soluble property of the photosensitizer.

Specific examples of the alkaline earth metal ion include a magnesium ion and a calcium ion.

The amine-based cation is not particularly limited as long as it is a cation in which a nitrogen atom has a positive charge. A specific example of the amine-based cation may be an ammonium cation (N⁺H₄), or may be one of a primary ammonium cation, a secondary ammonium cation, a tertiary ammonium cation, or a quaternary ammonium cation. Among them, the amine-based cation is preferably one of a tertiary ammonium cation or a quaternary ammonium cation, and more preferably a tertiary ammonium cation. A reason for this is that this improves the soluble property of the photosensitizer.

The tertiary ammonium cation is a cation represented by N⁺HY11Y12Y13 (hereinafter simply referred to as a "tertiary ammonium cation"). Note that each of Y11 to Y13 is one of a hydroxyl group, an alkyl group having carbon number from 1 to 6 both inclusive, an alkenyl group having carbon number from 2 to 6 both inclusive, an aryl group having carbon number from 6 to 15 both inclusive, or an arylalkyl group having carbon number from 7 to 13 both inclusive. In addition, each of one or more hydrogen groups included in each of Y11 to Y13 may be substituted by a hydroxyl group. Further, each of one or more methylene groups included in each of Y11 to Y13 may be substituted by one of -O- or -N⁺H-. Further, any two of Y11 to Y13 may be bonded to each other to form a ring.

Note that in a case where a plurality of ammonium cations are included in one molecule, the ammonium cations are each regarded as an ammonium cation having the highest number of substitutions. To give an example, in a case where a tertiary ammonium cation and a secondary ammonium cation, a primary ammonium cation, or both are included in one molecule, the ammonium cations are each regarded as the tertiary ammonium cation.

Specific examples of the alkyl group having carbon number from 1 to 6 both inclusive include a methyl group, an ethyl group, a propyl group, an isopropyl group, a butyl group, an isobutyl group, a sec-butyl group, a tert-butyl group, an amyl group, an isoamyl group, a tert-amyl group, and a hexyl group. Specific examples of the alkenyl group having carbon number from 2 to 6 both inclusive include a vinyl group, an ethylene group, a 2-propenyl group, a 3-butenyl group, a 2-butenyl group, a 4-pentenyl group, a 3-pentenyl group, a 2-hexenyl group, a 3-hexenyl group, and a 5-hexenyl group. Specific examples of the aryl group having carbon number from 6 to 15 both inclusive include a phenyl group, a trimethylphenyl group, a tolyl group, a xylyl group, a naphthyl group, and an anthryl group. Specific examples of the arylalkyl group having carbon number from 7 to 13 both inclusive include a benzyl group, an α-methylbenzyl group, an α,α-dimethylbenzyl group, a phenylethyl group, and a naphthylpropyl group.

In particular, any two of Y11 to Y13 are preferably bonded to each other to form a ring. A reason for this is that this improves the photosensitivity and the soluble property of the photosensitizer.

In addition, each of one or more hydrogen groups included in each of Y11 to Y13 is preferably substituted by a hydroxyl group. A reason for this is that this improves the soluble property of the photosensitizer.

Specific examples of the tertiary ammonium cation include respective cations represented by B1 to B34. Note that a specific example of the tertiary ammonium cation may be another cation not described as an example here.

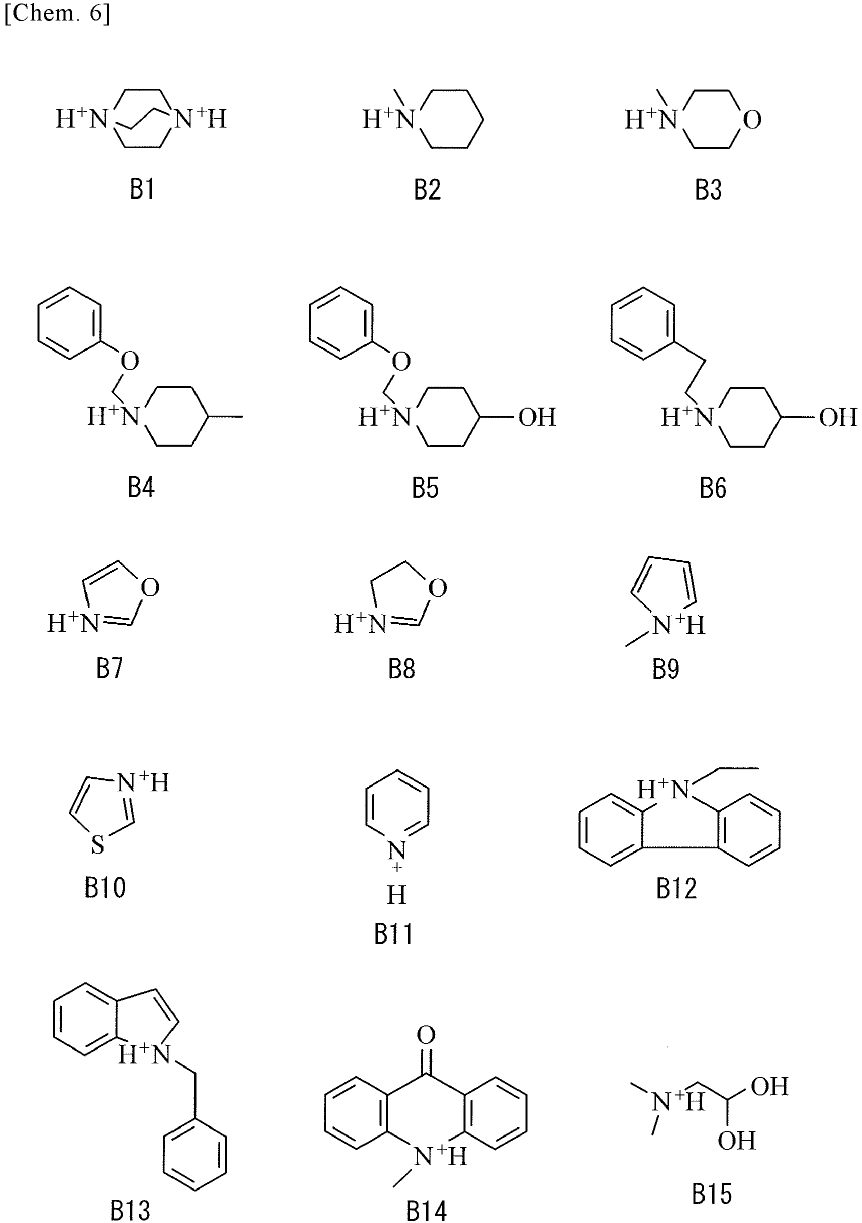

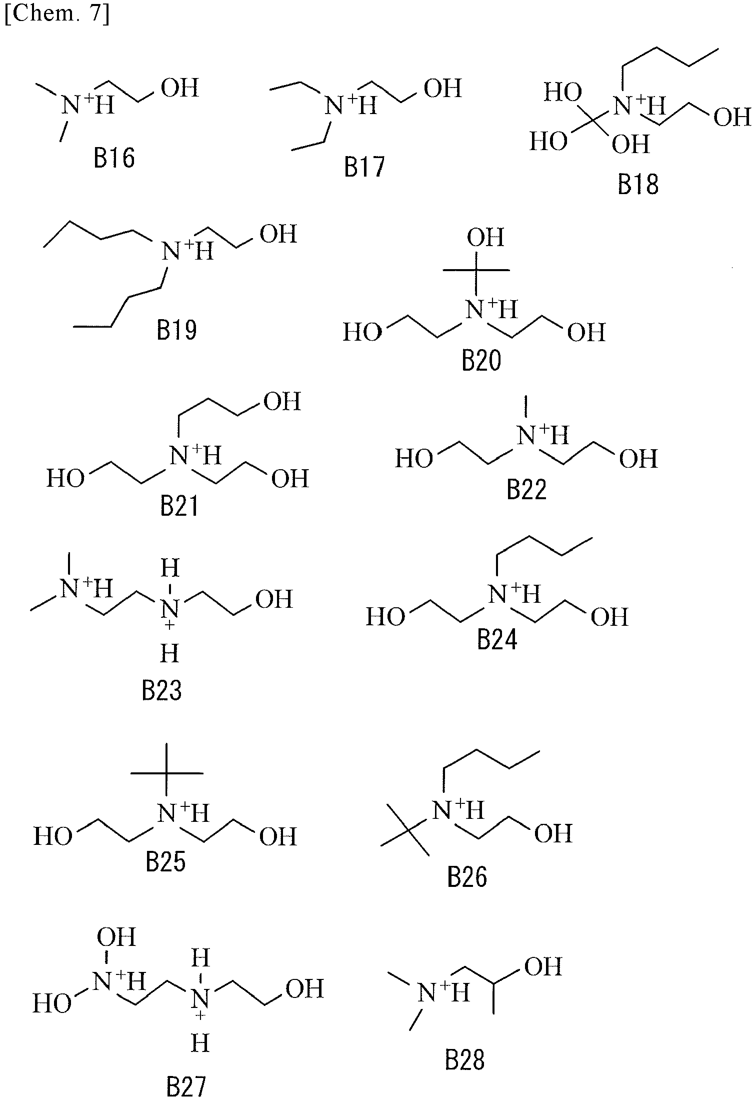

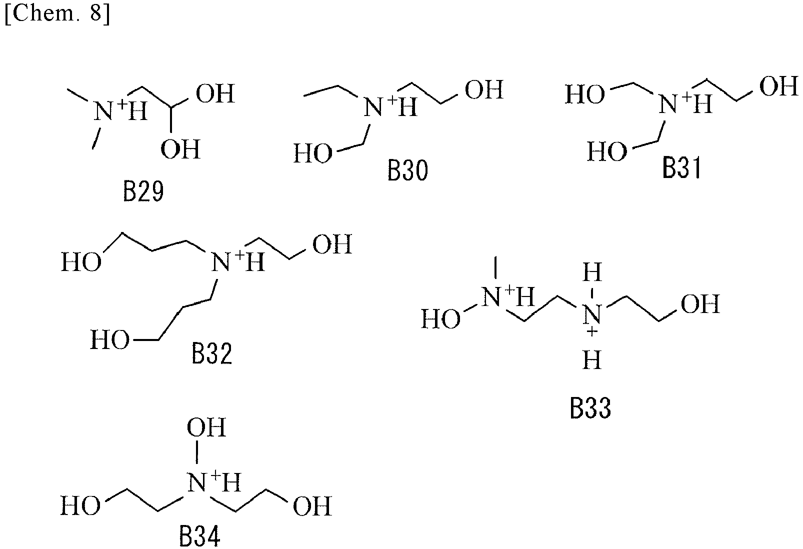

The respective tertiary ammonium cations represented by B1 to B14 are specific examples in each which any two or more of Y11 to Y13 are bonded to each other to form a ring. The respective tertiary ammonium cations represented by B5, B6, and B15 to B34 are specific examples in each which one or more hydrogen groups included in each of Y11 to Y13 are each substituted by a hydroxyl group.

The quaternary ammonium cation is a cation represented by N⁺Y14Y15Y16Y17 (hereinafter simply referred to as a "quaternary ammonium cation"). Note that each of Y14 to Y17 is one of a hydroxyl group, an alkyl group having carbon number from 1 to 6 both inclusive, an alkenyl group having carbon number from 2 to 6 both inclusive, an aryl group having carbon number from 6 to 15 both inclusive, or an arylalkyl group having carbon number from 7 to 13 both inclusive. Note that each of one or more hydrogen groups included in each of Y14 to Y17 may be substituted by a hydroxyl group. Further, each of one or more methylene groups included in each of Y14 to Y17 may be substituted by one of -O- or -N⁺H-. Further, any two of Y14 to Y17 may be bonded to each other to form a ring.

Specific examples of the quaternary ammonium cation include a tetraalkylammonium cation, a pyrrolidine cation, an imidazolium cation, a piperidinium cation, an imidazolinium cation, a morpholinium cation, and a piperazinium cation. Note that a specific example of the quaternary ammonium cation may be another cation not described as an example here.

Specific examples of the tetraalkylammonium include a tetramethylammonium cation, an ethyltrimethylammonium cation, a diethyldimethylammonium cation, a triethylmethylammonium cation, and a tetraethylammonium cation.

Specific examples of the pyrrolidine cation include an N,N-dimethylpyrrolidinium cation, an N-ethyl-N-methylpyrrolidinium cation, an N,N-diethylpyrrolidinium cation, a spiro-(1,1')-bipyrrolidinium cation, and a piperidine-1-spiro-1'-pyrrolidinium cation.

Specific examples of the imidazolium cation include an N,N'-dimethylimidazolium cation, an N-ethyl-N'-methylimidazolium cation, an N,N'-diethylimidazolium cation, a 1-ethyl-2,3-dimethylimidazolium cation, a 1,2,3-trimethylimidazolium cation, and a 1,2,3,4-tetramethylimidazolium cation.

Specific examples of the piperidinium cation include a pyridinium cation such as an N-methylpyridinium cation, an N-ethylpyridinium cation, or a 1,2-dimethylpyridinium cation, and an N,N-dimethylpiperidinium cation, an N-ethyl-N-methylpiperidinium cation, and an N,N-diethylpiperidinium cation.

Specific examples of the imidazolinium cation include an N,N-dimethyl imidazolinium cation, an N-ethyl-N'-methylimidazolinium cation, an N,N-diethylimidazolinium cation, a 1,2,3,4-tetramethylimidazolinium cation, a 1,3,4-trimethyl-2-ethylimidazolinium cation, a 1,3-dimethyl-2,4-diethylimidazolinium cation, a 1,2-dimethyl-3,4-diethylimidazolinium cation, a 1-methyl-2,3,4-triethylimidazolinium cation, a 1,2,3,4-tetraethylimidazolinium cation, a 1,2,3-trimethylimidazolinium cation, a 1,3-dimethyl-2-ethylimidazolinium cation, a 1-ethyl-2,3-dimethylimidazolinium cation, a 1-ethyl-2-methylimidazolium cation, and a 1,2,3-triethylimidazolinium cation.

Specific examples of the morpholinium cation include an N,N-dimethylmorpholinium cation, an N-ethyl-N-methylmorpholinium cation, and an N,N-diethylmorpholinium cation.

Specific examples of the piperazinium cation include an N,N,N',N'-tetramethylpiperazinium cation, an N-ethyl-N,N',N'-trimethylpiperazinium cation, an N,N-diethyl-N',N'-dimethylpiperazinium cation, an N,N,N'-triethyl-N'-methylpiperazinium cation, and an N,N,N',N'-tetraethylpiperazinium cation.

The primary ammonium cation is a cation represented by N⁺H₃Y18 (hereinafter referred to as a "primary ammonium cation"). In addition, the secondary ammonium cation is a cation represented by N⁺H₂Y19HY20 (hereinafter referred to as a "secondary ammonium cation"). Note that each of Y18 to Y20 is one of a hydroxyl group, an alkyl group having carbon number from 1 to 6 both inclusive, an alkenyl group having carbon number from 2 to 6 both inclusive, an aryl group having carbon number from 6 to 15 both inclusive, or an arylalkyl group having carbon number from 7 to 13 both inclusive.

Specific examples of the primary ammonium cation include an octylamine cation, a dodecylamine cation, a laurylamine cation, a tetradecylamine cation, a hexadecylamine cation, a stearylamine cation, an oleylamine cation, an allylamine cation, a benzylamine cation, and an aniline cation. The aniline cation is a cation represented by C₆H₅-N⁺H₃. Note that a specific example of the primary ammonium cation may be another cation not described as an example here.

Specific examples of the secondary ammonium cation include a dilaurylamine cation, a ditetradecylamine cation, a dihexadecylamine cation, a distearylamine cation, and an N-methylaniline cation. In addition, specific examples of the secondary ammonium cation include respective cations represented by B51 to B57. Note that a specific example of the secondary ammonium cation may be another cation not described as an example here.

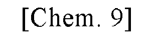

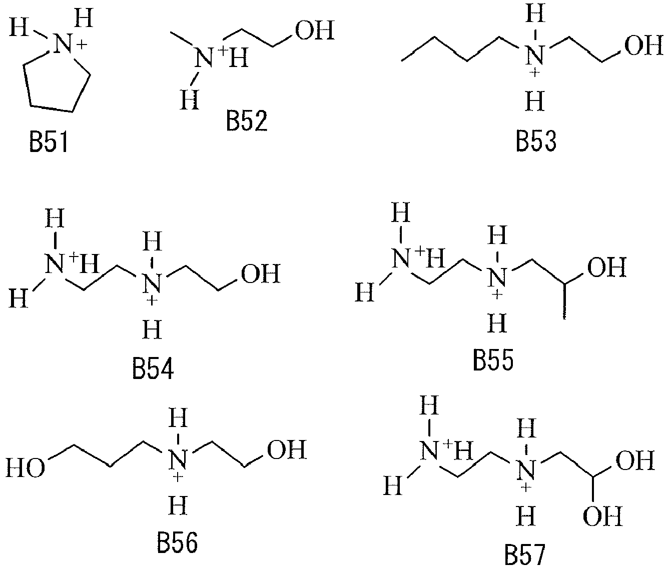

Specific examples of the tertiary sulfonium cation include a (2-carboxyethyl)dimethylsulfonium cation, a (3-chloropropyl)diphenylsulfonium cation, a cyclopropyldiphenylsulfonium cation, a diphenyl(methyl)sulfonium cation, a tri-n-butylsulfonium cation, a tri-p-tolylsulfonium cation, a triethylsulfonium cation, a trimethylsulfonium cation, and a triphenylsulfonium cation.

Specific examples of the tertiary oxonium cation include a triethyloxonium cation and a trimethyloxonium cation.

Specific examples of the quaternary phosphonium cation include a tetrabutylphosphonium cation and a butyltriphenylphosphonium cation.

Specific examples of the tertiary carbocation include a trisubstituted carbocation such as a triphenyl carbocation or a tri(substituted phenyl) carbocation. Specific examples of the tri(substituted phenyl) carbocation include a tri(methylphenyl) carbocation and a tri(dimethylphenyl) carbocation.

### (Details of Salt of Basic Group)

Details of the salt of the basic group are as follows. The cationic group included in the salt of the basic group is not particularly limited in kind as long as it is possible to secure the photosensitivity and the soluble property of the photosensitizer. It is sufficient that the cationic group is a monovalent cationic group or a cationic group of a higher valence. A specific example of the cationic group is therefore one of a tertiary sulfonium cation group, a tertiary oxonium cation group, a quaternary phosphonium cation group, a quaternary ammonium cation group, or a tertiary carbocation. Among them, the cationic group is preferably a quaternary ammonium cation group. A reason for this is that this allows for easy formation of a salt having favorable storage stability.

Specific examples of the tertiary sulfonium cation group include a group represented by -S⁺-(R100)₂. Such a group has a structure obtained by removing one substituent bonded to a sulfur atom from the above-described tertiary sulfonium cation. Each of R100s is one of an alkyl group having carbon number from 1 to 20 both inclusive, an aryl group having carbon number from 6 to 30 both inclusive, an arylalkyl group having carbon number from 7 to 30 both inclusive, or a heterocycle-containing group having carbon number from 2 to 20 both inclusive. Note that any two of R100s may be bonded to each other to form a ring. Details of R100 described here are similarly applicable in the following.

Specific examples of the tertiary oxonium cation group include a group represented by -O⁺-(R100)₂. Such a group has a structure obtained by removing one substituent bonded to an oxygen atom from the above-described tertiary oxonium cation.

Specific examples of the quaternary phosphonium cation group include a group represented by -P⁺-(R100)₃. Such a group has a structure obtained by removing one substituent bonded to a phosphorus atom from the above-described quaternary phosphonium cation.

Specific examples of the quaternary ammonium cation group include a group represented by -N⁺-(R100)₃. Such a group has a structure obtained by removing one substituent bonded to a nitrogen atom from the above-described quaternary ammonium cation.

Specific examples of the tertiary carbocation group include a group represented by -C⁺-(R100)₂. Such a group has a structure obtained by removing one substituent bonded to a carbon atom from the above-described tertiary carbocation.

In -N⁺-(R100)₃ which is a specific example of the quaternary ammonium cation group, as described above, two or three of the three R100s may be bonded to each other to form a ring or rings. Examples of a group in which two R100s are bonded to each other include a pyrrolidinium cation group, a morpholinium cation group, and a piperazine cation group. Examples of a group in which three R100s are bonded to one another include a pyridinium cation group.

The anion component that is able to form a salt with the cationic group described above is not particularly limited as long as it is possible to secure the soluble property of the photosensitizer. Specific examples of the anion component include a halogen ion, an inorganic ion, an organic sulfonic acid ion, an organic phosphoric acid ion, a tetraarylboric acid ion, and an organic sulfonylmethide ion.

Specific examples of the halogen ion include a fluorine ion, a chlorine ion, a bromine ion, and an iodine ion.

Specific examples of the inorganic ion include a perchloric acid ion, a chloric acid ion, a thiocyanic acid ion, a hexafluoro phosphoric acid ion, an antimony hexafluoride ion, an arsenic hexafluoride ion, and a boron tetrafluoride ion. Further, specific examples of the inorganic ion include an organic phosphoric-acid-based ion, an organic fluorosulfonimide ion, a tetraarylboric acid ion, various aliphatic carboxylic acid anions, an aromatic carboxylic acid anion, and an organic sulfonylmethide ion.

Specific examples of the organic sulfonic acid ion include a methanesulfonic acid ion, a fluorosulfonic acid ion, a benzenesulfonic acid ion, a toluenesulfonic acid ion, a 1-naphthylsulfonic acid ion, a 2-naphthylsulfonic acid ion, a trifluoromethanesulfonic acid ion, a pentafluoroethanesulfonic acid ion, a heptafluoropropanesulfonic acid ion, a nonafluorobutanesulfonic acid ion, a undecafluoropentanesulfonic acid ion, a tridecafluorohexanesulfonic acid ion, a pentadecafluoroheptanesulfonic acid ion, a heptadecafluorooctanesulfonic acid ion, a perfluoro-4-ethylcyclohexanesulfonic acid ion, an N-alkyl(or aryl)diphenylamine-4-sulfonic acid ion, a 2-amino-4-methyl-5-chlorobenzenesulfonic acid ion, a 2-amino-5-nitrobenzenesulfonic acid ion, the sulfonic acid ions disclosed in Japanese Unexamined Patent Application Publication No. 2004-53799, a camphorsulfonic acid ion, a fluorobenzenesulfonic acid ion, a difluorobenzenesulfonic acid ion, a trifluorobenzenesulfonic acid ion, a tetrafluorobenzenesulfonic acid ion, and a pentafluorobenzenesulfonic acid ion.

Specific examples of the organic phosphoric-acid-based ion include an octylphosphoric acid ion, a dodecylphosphoric acid ion, an octadecylphosphoric acid ion, a phenylphosphoric acid ion, a nonylphenylphosphoric acid ion, and a 2,2'-methylene bis(4,6-di-t-butylphenyl)phosphoric acid ion.

Specific examples of the organic fluorosulfonimide ion include a bis(trifluoromethanesulfone) imide ion, a bis(pentafluoroethanesulfone) imide ion, a bis(heptafluoropropanesulfone) imide ion, a bis(nonafluorobutanesulfone) imide ion, a bis(undecafluoropentanesulfone) imide ion, a bis(pentadecafluoroheptanesulfone) imide ion, a bis(tridecafluorohexanesulfone) imide ion, a bis(heptadecafluorooctanesulfonimide) ion, a (trifluoromethanesulfone)(nonafluorobutanesulfone) imide ion, a (methanesulfone)(trifluoromethanesulfone) imide ion, and a cyclo-hexafluoropropane-1,3-bis(sulfonyl) imide ion.

Specific examples of the tetraarylboric acid ion include a tetrakis(pentafluorophenyl)boric acid ion, a tetrakis(4-fluorophenyl)boric acid ion, a tetraphenylboric acid ion, the boric acid ions disclosed in Japanese Unexamined Patent Application Publication No. 2008-081470, the boric acid ions disclosed in Japanese Unexamined Patent Application Publication No. 2007-112854, the boric acid ions disclosed in Japanese Unexamined Patent Application Publication No. H06-184170, the boric acid ions disclosed in Japanese Unexamined Patent Application Publication (Published Japanese Translation of PCT Application) No. JP2002-526391, and the boric acid ions disclosed in International Application Publication No. PCT/JP2008/069562.

Specific examples of the organic sulfonylmethide ion include tris(trifluoromethanesulfonyl)methide and tris(methanesulfonyl)methide.

Other than the above, a specific example of the anion component may be: an alkyl sulfonic acid ion; a fluoro-substituted alkyl sulfonic acid ion; an ion obtained by substituting one or more hydrogen groups in each of an alkylsulfonimide and a fluoro-substituted alkylsulfonimide by an acryloyloxy group, a methacryloyloxy group, or both; or an ion obtained by substituting one or more hydrogen groups in each of an alkylsulfonimide and a fluoro-substituted alkylsulfonimide by an aliphatic cyclic alkyl group such as a norbornyl group or an adamantyl group. In addition, the specific example of the anion component may be: a quencher ion having a function of deexciting (quenching) an active molecule in an excited state; or a metallocene compound ion in which ferrocene, luteocene, or the like having an negative ionic group such as a carboxyl group, a phosphonic acid group, or a sulfonic acid group is introduced into a cyclopentadienyl ring.

Among them, the anion component is preferably a halogen ion, and more preferably one of a chlorine ion or a bromine ion. A reason for this is that this allows for easy synthesis of the photosensitizer and improves the storage stability of the polymerizable composition.

### (Details of w)

The value of w represents the number of the salt of the acidic group bonded to L11 or the number of the salt of the basic group bonded to L11. In particular, the value of w is preferably within a range from 1 to 5 both inclusive, more preferably 1 or 2, and still more preferably 1. A reason for this is that this allows for easy synthesis of the photosensitizer and improves dispersion stability of the photosensitizer.

L11 in a case where the salt-forming group is the salt of the acidic group is preferably >C=O, -NHCO-, -CO-NH-, >NR23, or a (w + 1)-valent aliphatic hydrocarbon group having carbon number from 1 to 120 both inclusive. It is also preferable that L11 be absent. Among them, L11 is preferably a (w + 1)-valent aliphatic hydrocarbon group having carbon number from 1 to 20 both inclusive or absent, and more preferably absent. In other words, the salt of the acidic group is more preferably directly bonded to a benzene ring. A reason for this is that this improves the photosensitivity of the photosensitizer.

In a case where the anionic group forming the salt-forming group is a carboxylic acid ion group or the like, a conjugated structure is easily formed between the tricyclic structure and the salt-forming group, and therefore, it is easier for the photosensitizer to absorb light in a longer wavelength range as compared with a case where such a conjugated structure is not formed.

L11 in a case where the salt-forming group is the salt of the basic group is preferably a (w + 1)-valent aliphatic hydrocarbon group having carbon number from 1 to 20 both inclusive, and more preferably a (w + 1)-valent aliphatic hydrocarbon group having carbon number from 2 to 10 both inclusive.

As L11 in the case where the salt-forming group is the salt of the basic group, a group obtained by substituting each of one or more methylene groups included in each of the (w + 1)-valent aliphatic hydrocarbon group, the (w + 1)-valent cyclic aromatic hydrocarbon group, and the (w + 1)-valent heterocycle-containing group described above by -O-, -S-, -CO-, -OCO-, -CO-O-, -O-CO-O-, -O-CO-O-, -S-CO-, -COS-, -S-CO-O-, -O-CO-S-, -CO-NH-, -NH-CO-, -NH-CO-O-, -NH-CO-O-, -NR'-, -S-S-, or -SO₂-, more preferably a group involving substitution by -O-, and still more preferably a group obtained by substituting an end portion on the benzene ring side by -O-. In other words, it is still more preferable that the end portion of L11 is bonded to a benzene ring via -O-. A reason for this is that this allows for easy synthesis of the photosensitizer.

As described above, one or more of R11 to R18 are a salt-forming-group-containing group or salt-forming-group-containing groups. The total number of the salt-forming-group-containing groups is not particularly limited as long as it is possible to secure the photosensitivity and the soluble property of the photosensitizer. Specifically, it is sufficient that the total number of the salt-forming-group-containing groups is 8 or less. However, the total number of the salt-forming-group-containing groups is preferably 1 or 2, and more preferably 1. A reason for this is that this allows for easy synthesis of the photosensitizer and improves the soluble property of the photosensitizer. Another reason for this is that this improves the storage stability of the polymerizable composition.

A bonding position of the salt-forming-group-containing group is not particularly limited as long as it is possible to secure the photosensitivity and the soluble property of the photosensitizer. Specifically, it is sufficient that the salt-forming-group-containing group is substituted by one of R11 to R18. However, the salt-forming-group-containing group is preferably substituted by R4. A reason for this is that this allows for easy synthesis of the photosensitizer.

### (Details of Z11 and Z12)

Details of R19 (a hydrogen group, a straight-chain alkyl group having carbon number of greater than or equal to 1 and less than or equal to 20, a branched alkyl group having carbon number of greater than or equal to 3 and less than or equal to 20, an aryl group having carbon number of greater than or equal to 6 and less than or equal to 30, an arylalkyl group having carbon number of greater than or equal to 7 and less than or equal to 30, and a heterocycle-containing group having carbon number of greater than or equal to 2 and less than or equal to 20) regarding the candidates for Z11 are as described above. Note that Z11 may be a direct bond. The direct bond refers to that Z11 is absent and, in the tricyclic structure, a carbon atom in one benzene ring and a carbon atom in another benzene ring are bonded to each other with no Z11 interposed therebetween.

Details of each of R20 and R21 (a hydrogen group, a straight-chain alkyl group having carbon number of greater than or equal to 1 and less than or equal to 20, a branched alkyl group having carbon number of greater than or equal to 3 and less than or equal to 20, an aryl group having carbon number of greater than or equal to 6 and less than or equal to 30, an arylalkyl group having carbon number of greater than or equal to 7 and less than or equal to 30, and a heterocycle-containing group having carbon number of greater than or equal to 2 and less than or equal to 20) regarding the candidates for Z12 are as described above.

A combination of the kind of Z11 and the kind of Z12 is not particularly limited. In particular, the combination of Z11 and Z12 is preferably a combination that is able to form a conjugated system with two benzene rings forming a three-membered structure. Specific examples of the combination of Z11 and Z12 include: a combination in which Z11 is >S and Z12 is >C=O (a thioxanthone structure); a combination in which Z11 is >N and Z12 is >N (a phenazine structure); a combination in which Z11 is >N and Z12 is >=O (an acridone structure); and a combination in which Z11 is absent and Z12 is >=O (a fluorenone structure). Note that the structure described in parentheses represents the three-membered structure.

In particular, it is preferable that one or two of R11 to R18 be a salt-forming-group-containing group or salt-forming-group-containing groups, and it is more preferable that one of R11 to R18 be a salt-forming-group-containing group. Further, it is preferable that Z11 be >C=O and Z12 be -S-. A reason for this is that this improves the curability of the polymerizable composition. In particular, as described above, in a case where the polymerizable composition is used as an ink composition for ink jet, this effectively improves curability of an ink including the ink composition.

Note that in a case where Z11 is >C=O and Z12 is -S-, the photosensitizer is able to absorb light in a wide wavelength range including light having a long wavelength of 360 nm or greater. In this case, if a conjugated structure is formed between two benzene rings in the tricyclic structure, selecting a component that is able to absorb light having a long wavelength as a cation component or an anion component that is able to form a salt with the anionic group or the cationic group included in the salt-forming-group-containing group makes it possible for the photosensitizer to absorb light having a longer wavelength.

### (Specific Examples of Photosensitizer)

Specific examples of the photosensitizer include respective compounds represented by C1 to C96. Note that a specific example of the photosensitizer may be another compound not described as an example here.

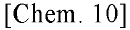

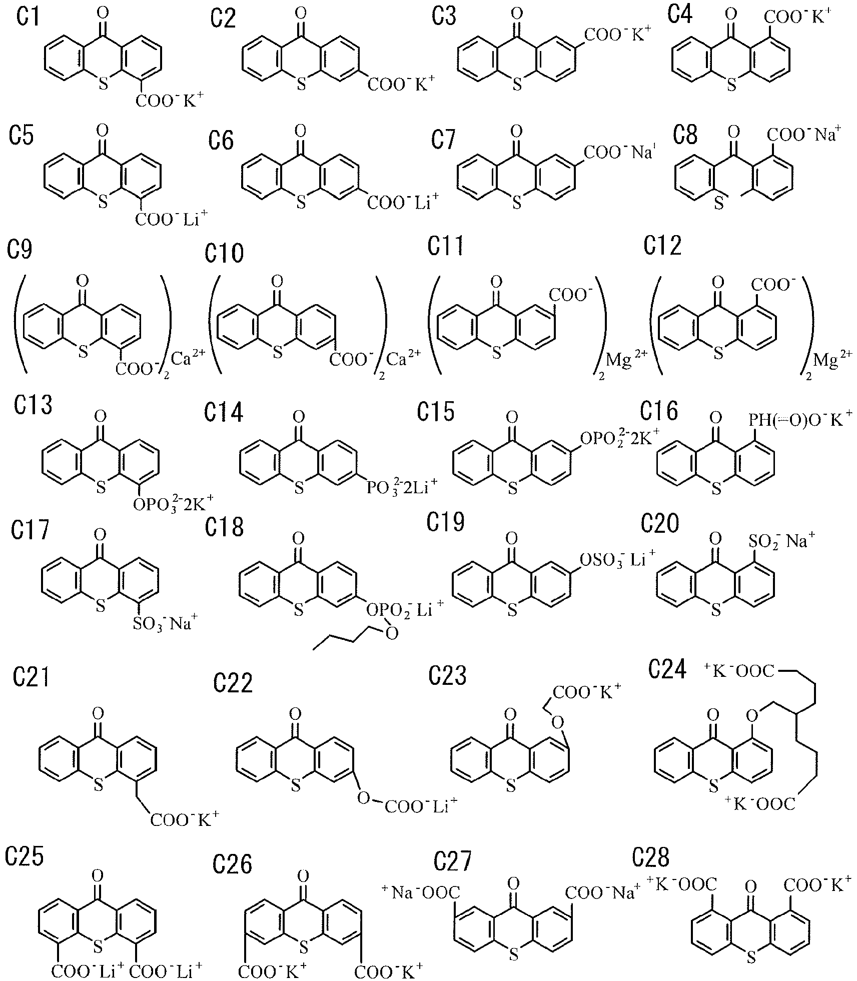

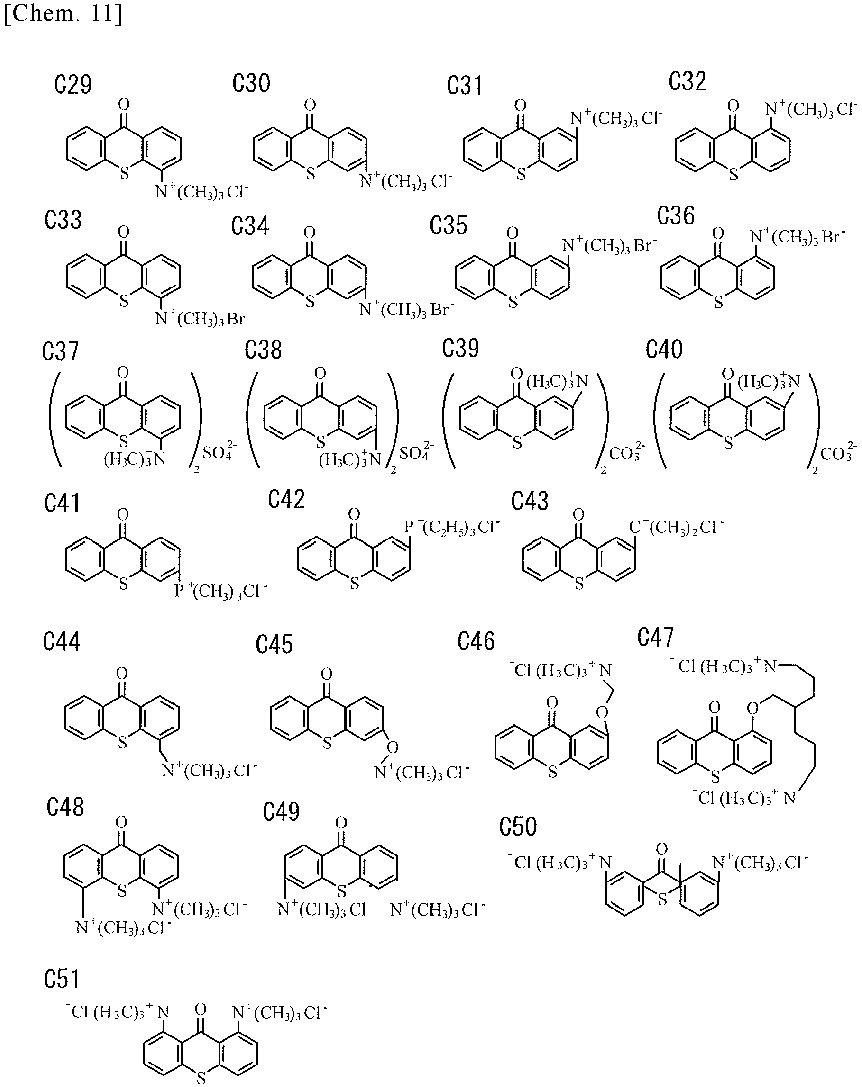

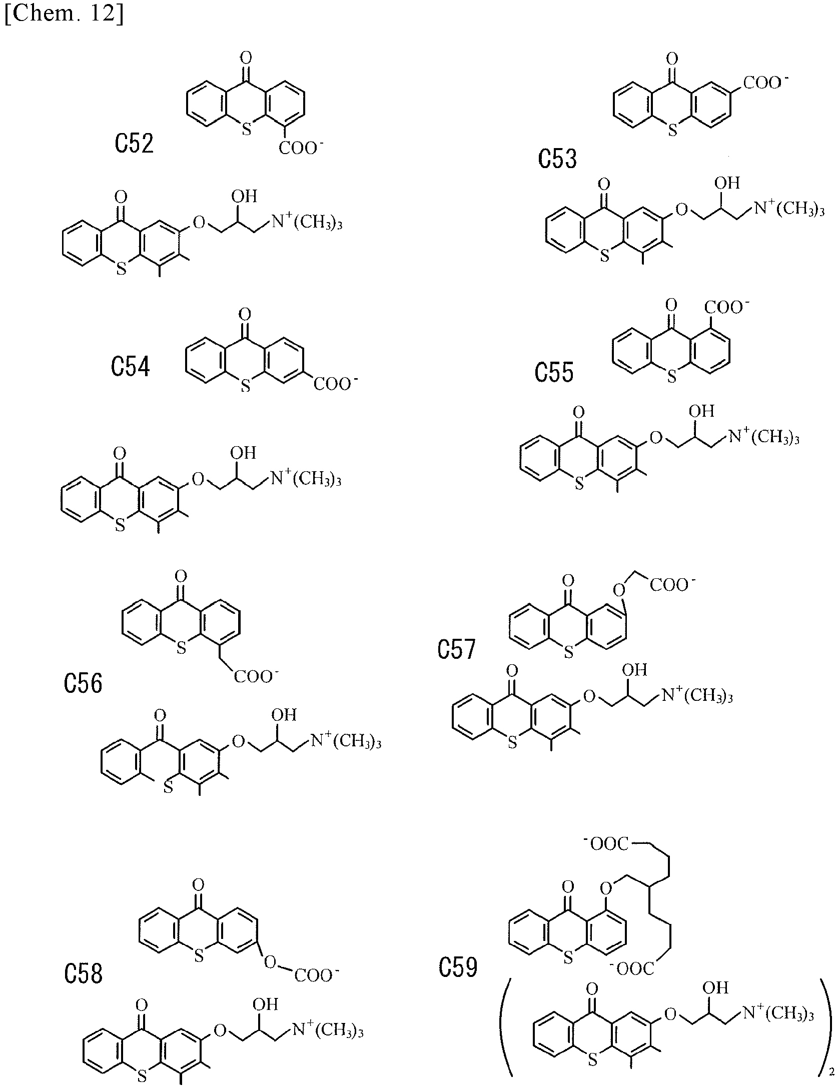

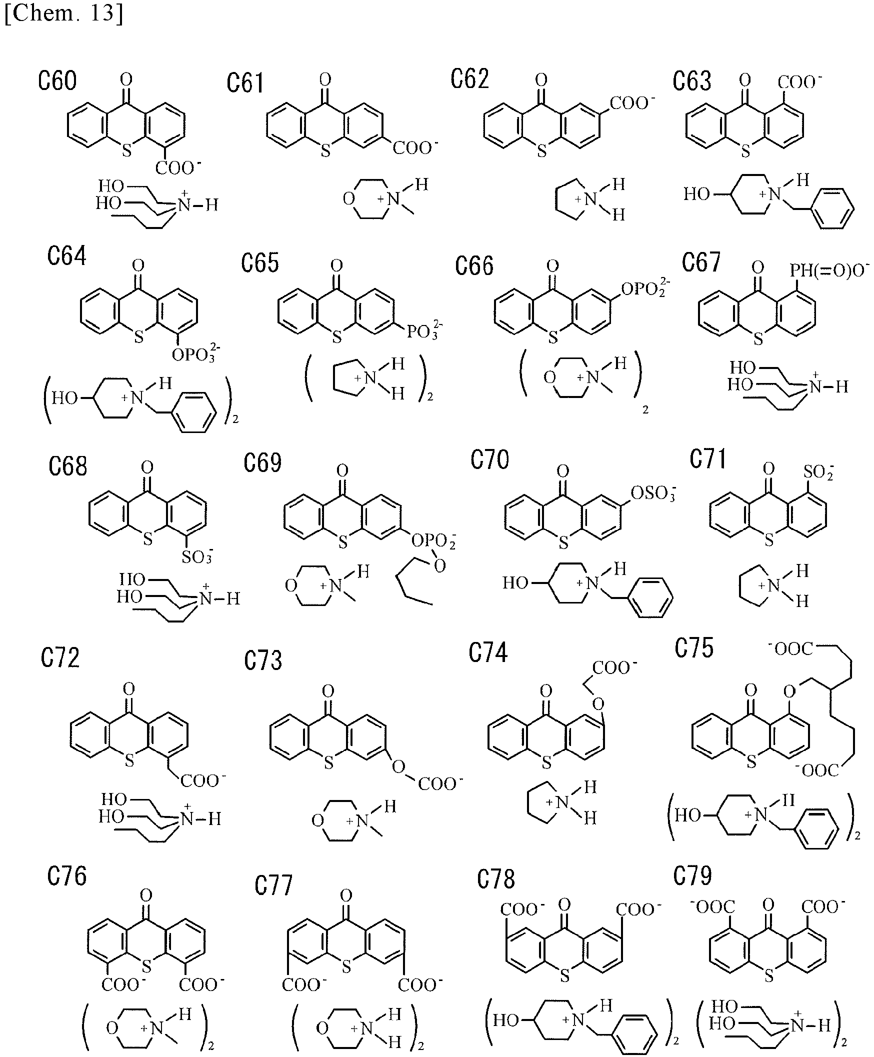

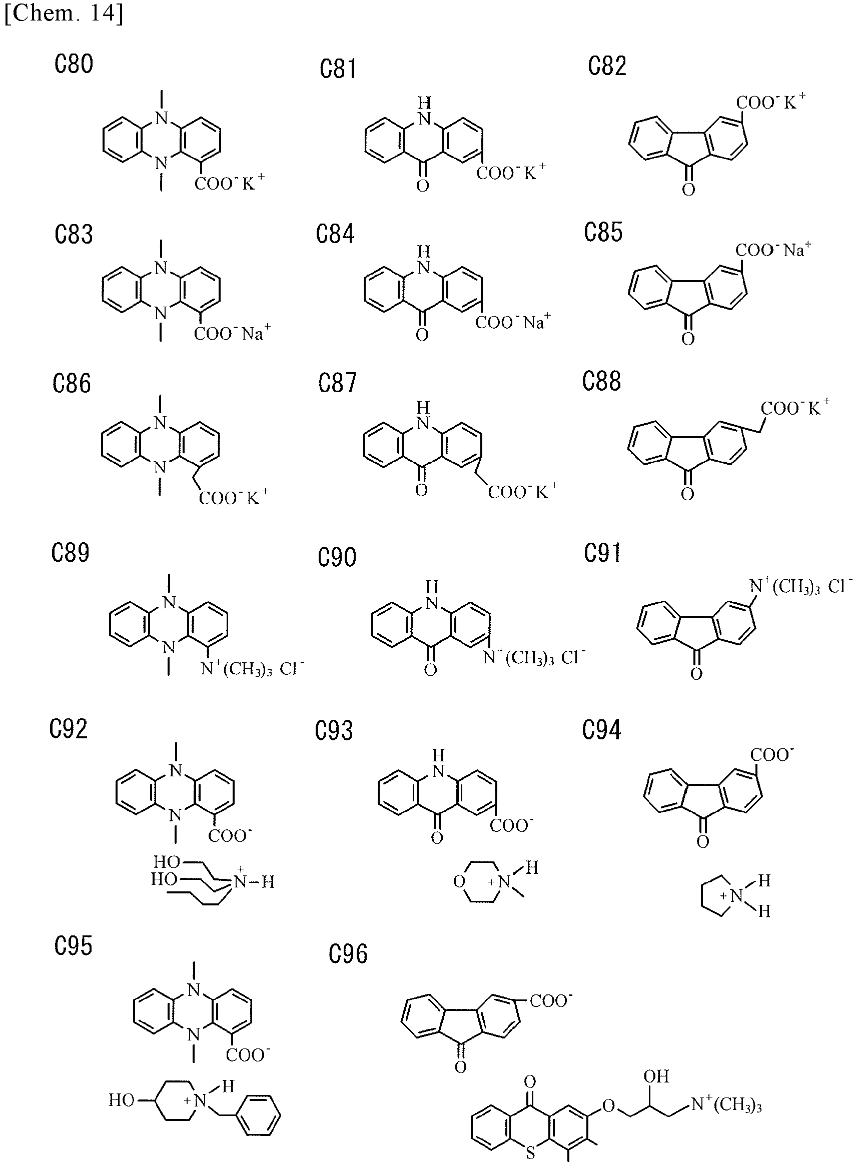

Note that the method of manufacturing the photosensitizer is not particularly limited as long as it is a manufacturing method that allows for synthesis of compounds having the above-described structures.

### (Maximum Absorption Wavelength of Photosensitizer)

The maximum absorption wavelength of the photosensitizer within a wavelength range from 300 nm to 600 nm both inclusive is not particularly limited as long as it allows for absorption of light for exposure and generation of a radical. In particular, the maximum absorption wavelength of the photosensitizer is preferably 380 nm or greater, more preferably within a range from 385 nm to 550 nm both inclusive, still more preferably within a range from 390 nm to 500 nm both inclusive, and particularly preferably within a range from 390 nm to 450 nm both inclusive. A reason for this is that this secures the photosensitivity of the photosensitizer.

A method of measuring the maximum absorption wavelength is not particularly limited as long as it is possible to measure the maximum absorption wavelength with high accuracy. A specific method of measuring the maximum absorption wavelength is as follows.
(1) The photosensitizer is dissolved in water to thereby prepare an aqueous solution for measurement.
(2) A quartz cell (having an optical path length of 10 mm and a thickness of 1.25 mm) is filled with the aqueous solution for measurement.
(3) The aqueous solution for measurement is analyzed by means of a spectrophotometer (e.g., a UV-visible spectrophotometer V-670 available from JASCO Corporation) to thereby measure intensity of an absorption spectrum. In this case, intensity of an absorption spectrum of water alone is measured in advance, and performed is a correction process in which the intensity of the absorption spectrum of water alone is subtracted from the intensity of the absorption spectrum of the aqueous solution for measurement.

### (Content of Photosensitizer)

A content of the photosensitizer in the polymerizable composition is not particularly limited. In particular, the content of the photosensitizer is preferably within a range from 0.1 mass% to 5 mass% both inclusive, and more preferably within a range from 0.2 mass% to 3 mass% both inclusive. A reason for this is that this improves a property such as the storability or the curability of the polymerizable composition.

### (Aqueous Solvent)

The term "aqueous solvent" is a generic term for solvents each including water and an organic solvent miscible with water. In other words, the aqueous solvent may be only water, only an organic solvent miscible with water, or a mixture of water and the organic solvent miscible with water. The "organic solvent miscible with water" refers to an organic solvent that dissolves by 0.01 g or more in 100 g of water at 20°C.

The use of the polymerizable composition including the aqueous solvent provides the following advantages. Firstly, it makes it easier to control the thickness of the film described above. Secondly, it makes it possible to use, as the above-described base, not only a base having high resistance to an organic solvent but also a base having low resistance to an organic solvent, therefore expanding the degree of freedom in choosing the kind of base. Thirdly, when the polymerizable composition is applied onto an organic material (e.g., a film including the organic material), it helps to prevent the organic material from being damaged by the polymerizable composition. Fourthly, it reduces an environmental impact upon the use of the polymerizable composition because the aqueous solvent is environment-friendly.

Water is not particularly limited in kind, and specific examples thereof include pure water and ion-exchanged water.

The organic solvent miscible with water is not particularly limited in kind, and specific examples thereof include ethylene glycol, diethylene glycol, triethylene glycol, propylene glycol, dipropylene glycol, 2-pyrrolidone, N-methyl-2-pyrrolidone, 1,2-propanediol, 1,3-propanediol, 1,2-butanediol, 1,3-butanediol, 1,4-butanediol, 2,3-butanediol, 2,2-dimethyl-1,3-propanediol, 2-methyl-1,3-propanediol, 1,2-pentanediol, 1,5-pentanediol, 2,4-pentanediol, 1,2-hexanediol, 3,5-dimethyl-3-hexyne-2,5-diol, 2,5-hexanediol, hexylene glycol, 1,6-hexanediol, 2-ethyl-1,3-hexanediol, 2,2,4-trimethyl-l,3-pentanediol, 2,5-dimethyl-2,5-hexanediol, sulfolane, 1,4-cyclohexanedimethanol, 2,2-thiodiethanol, 3-pyridylcarbinol, propylene glycol monomethyl ether, dipropylene glycol methyl ether, tripropylene glycol methyl ether, propylene glycol ethyl ether, propylene glycol n-propyl ether, dipropylene glycol n-propyl ether, tripropylene glycol n-propyl ether, propylene glycol n-butyl ether, dipropylene glycol n-butyl ether, tripropylene glycol n-butyl ether, propylene glycol t-butyl ether, dipropylene glycol t-butyl ether, propylene glycol phenyl ether, ethylene glycol methyl ether, diethylene glycol methyl ether, triethylene glycol methyl ether, ethylene glycol ethyl ether, diethylene glycol ethyl ether, triethylene glycol ethyl ether, ethylene glycol n-propyl ether, ethylene glycol n-butyl ether, diethylene glycol n-butyl ether, triethylene glycol n-butyl ether, ethylene glycol n-hexyl ether, diethylene glycol n-hexyl ether, and ethylene glycol phenyl ether.

Among the above, as the organic solvent miscible with water, a lower alcohol having carbon number of 5 or less is preferable. A reason for this is that this markedly improves a soluble property in water.

Note that in a case where the polymerizable composition is used as an ink composition for ink jet, although a content of the aqueous solvent in the polymerizable composition is not particularly limited, the content is preferably within a range from 30 mass% to 95 mass% both inclusive, more preferably within a range from 50 mass% to 90 mass% both inclusive, and still more preferably within a range from 60 mass% to 80 mass% both inclusive, in particular. A reason for this is that this makes it easy to control fluidity of an ink including the ink composition.

Further, although a content of the organic solvent miscible with water in the aqueous solvent is not particularly limited, the content is preferably 40 mass% or less, more preferably 20 mass% or less, and still more preferably 10 mass% or less, in particular. A reason for this is that this reduces an environmental impact upon the use of the polymerizable composition.

### (Others)

Note that the polymerizable composition may further include one or more of other components on an as-needed basis. The kind of the other component or the kinds of the other components may be freely chosen depending on the use of the polymerizable composition, etc.
(Water-soluble Polyfunctional Acrylamide Compound and Water-soluble Polyfunctional Acrylic Acid Ester Compound)

Specifically, the other component includes a water-soluble polyfunctional acrylamide compound, a water-soluble polyfunctional acrylic acid ester compound, or both. A reason for this is that this improves the curability of the polymerizable composition.

The term "water-soluble polyfunctional acrylamide compound" is a generic term for water-soluble compounds (components which each dissolve by 0.05 mass% or more in water at 25°C) in each which the sum of the number of acrylamide groups and the number of methacrylamide groups included in the molecule is two or greater.

The term "water-soluble polyfunctional acrylic acid ester compound" is a generic term for water-soluble compounds (components which each dissolve by 0.05 mass% or more in water at 25°C) in each which the sum of the number of acrylic groups and the number of methacrylic groups included in the molecule is two or greater and the sum of the number of acrylamide groups and the number of methacrylamide groups included in the molecule is 1 or less.

Only one kind of water-soluble polyfunctional acrylamide compound may be used, or two or more kinds of water-soluble polyfunctional acrylamide compounds may be used. Similarly, only one kind of water-soluble polyfunctional acrylic acid ester compound may be used, or two or more kinds of water-soluble polyfunctional acrylic acid ester compounds may be used. Hereinafter, "the water-soluble polyfunctional acrylic acid ester compound and the water-soluble polyfunctional acrylic acid ester compound" are simply referred to as "a polyfunctional acrylamide compound and a polyfunctional acrylic acid ester compound", respectively, for convenience.

The soluble property (the solubility) of the polyfunctional acrylamide compound in the aqueous solvent is not particularly limited. In particular, the solubility is preferably 0.1 mass% or higher, more preferably 0.5 mass% or higher, and still more preferably 1.0 mass% or higher, in water at 25°C. A reason for this is that this improves the storage stability of the polymerizable composition, and therefore helps to prevent over-time sedimentation and precipitation of a solid content in the polymerizable composition. Another reason for this is that this improves the curability of the polymerizable composition.

The soluble property (the solubility) of the polyfunctional acrylic acid ester compound in the aqueous solvent is not particularly limited. In particular, the solubility of the polyfunctional acrylic acid ester compound is preferably similar to the solubility of the polyfunctional acrylamide compound described above. A reason for this is that this provides similar advantages.

In particular, the polyfunctional acrylamide compound preferably includes one or more of compounds represented by Formula (5). A reason for this is that this improves the curability of the polymerizable composition. Another reason for this is that in a case where the polymerizable composition incudes a colorant, this improves dispersibility of the colorant in the polymerizable composition, and therefore makes it easier for the colorant to be dispersed uniformly in the polymerizable composition. 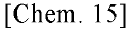 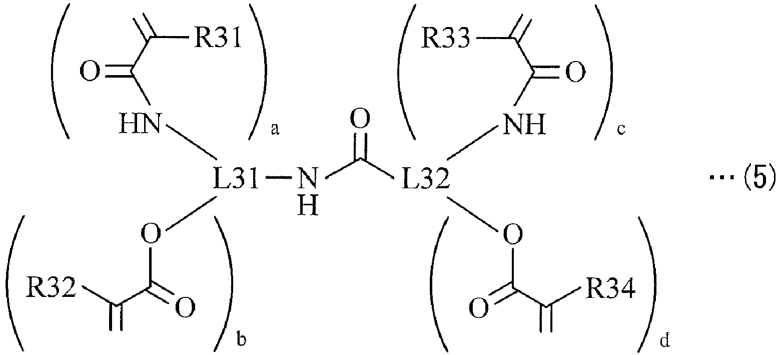 where:
each of R31, R32, R33, and R34 is one of a hydrogen group or a methyl group;
each of L31 and L32 is one of a straight-chain alkyl group having carbon number of greater than or equal to 1 and less than or equal to 30, a branched alkyl group having carbon number of greater than or equal to 3 and less than or equal to 30, or a heterocycle-containing group having carbon number of greater than or equal to 2 and less than or equal to 30; each of one methylene group in each of L31 and L32 is substitutable by one of -O-, -CO-, -COO-, -OCO-, -NR35-, -NR36-CO-, or -S-; each of at least one hydrogen group in each of L31 and L32 is substitutable by one of a halogen group, a nitro group, a cyano group, a hydroxyl group, an amino group, a carboxyl group, a methacryloyl group, an acryloyl group, an epoxy group, a vinyl ether group, a mercapto group, an isocyanate group, or a heterocycle-containing group having carbon number of greater than or equal to 2 and less than or equal to 30; each of R35 and R36 is one of a straight-chain alkyl group having carbon number of greater than or equal to 1 and less than or equal to 30, a branched alkyl group having carbon number of greater than or equal to 3 and less than or equal to 30, or a heterocycle-containing group having carbon number of greater than or equal to 2 and less than or equal to 30;
each of a, b, c, and d is an integer of greater than or equal to 0 and less than or equal to 5; and a + b + c + d is an integer of greater than or equal to 2.

The compound represented by Formula (5) includes a central group (>L31-NH-C(=O)-L32<) having an amide bond (-NH-C(=O)-). In the compound represented by Formula (5), a-number of nitrogen-containing groups (-NH-C(=O)-C(=CH₂)-R31) and b-number of oxygen-containing groups (-O-C(=O)-C(=CH₂)-R32) are bonded to one end portion (L31) of the central group, and c-number of nitrogen-containing groups (-NH-C(=O)-C(=CH₂)-R33) and d-number of oxygen-containing groups (-O-C(=O)-C(=CH₂)-R34) are bonded to the other end portion (L32) of the central group.

Each of R31 to R34 may be a hydrogen group or a methyl group as described above; however, each of R31 to R34 is preferably a hydrogen group in particular. A reason for this is that this improves a soluble property of the polyfunctional acrylamide compound in water, and also improves the curability of the polymerizable composition.

Details of each of the straight-chain alkyl group, the branched alkyl group, and the heterocycle-containing group, which are the candidates for each of L31 and L32, are as described above. Note that each of one or more methylene groups included in each of L31 and L32 may be substituted by a substituent. The substituent described here is one of -O-, -CO-, -COO-, -OCO-, -NR35-, -NR36-CO-, or -S-. Details of each of the straight-chain alkyl group, the branched alkyl group, and the heterocycle-containing group, which are the candidates for each of R35 and R36, are as described above.

Note that each of one or more hydrogen groups included in each of L31 and L32 may be substituted by a halogen group, a nitro group, a cyano group, a hydroxyl group, an amino group, a carboxyl group, a methacryloyl group, an acryloyl group, an epoxy group, a vinyl ether group, a mercapto group, an isocyanate group, or a heterocycle-containing group having carbon number from 2 to 30 both inclusive, as described above. Details of each of the halogen group and the heterocycle-containing group are as described above.

a is a value determining the number of nitrogen-containing groups bonded to L31, and b is a value determining the number of oxygen-containing groups bonded to L31. c is a value determining the number of nitrogen-containing groups bonded to L32, and d is a value determining the number of oxygen-containing groups bonded to L32. The value of each of a to d is not particularly limited as long as it is an integer within a range from 0 to 5 both inclusive as described above; however, there is a condition that a + b + c + d is an integer of 2 or greater. Therefore, the total number of the nitrogen-containing group bonded to L31, the oxygen-containing group bonded to L31, the nitrogen-containing group bonded to L32, and the oxygen-containing group bonded to L32 included in the polyfunctional acrylamide compound is two or more.

A content of each of the polyfunctional acrylamide compound and the polyfunctional acrylic acid ester compound in the polymerizable composition is not particularly limited. In particular, the total content of the polyfunctional acrylamide compound and the polyfunctional acrylic acid ester compound is preferably 1 mass% or greater, more preferably 1 mass% or greater and less than 30 mass%, and still more preferably 1 mass% or greater and less than 20 mass%. A reason for this is that this improves the curability of the polymerizable composition.

The total content described here is a content described below. In a case where the polymerizable composition includes only the polyfunctional acrylamide compound, the total content is the content of that polyfunctional acrylamide compound. In a case where the polymerizable composition includes only the polyfunctional acrylic acid ester compound, the total content is the content of that polyfunctional acrylic acid ester compound. In a case where the polymerizable composition includes both the polyfunctional acrylamide compound and the polyfunctional acrylic acid ester compound, the total content is the sum of the content of the polyfunctional acrylamide compound and the content of the polyfunctional acrylic acid ester compound.

### (Colorant)

Further, the other component includes a colorant. The colorant is a component that colors the polymerizable composition. A reason why the other component includes a colorant is that this makes it possible to color the polymerizable composition with use of the colorant. Another reason is that, in a film formed using the polymerizable composition including the colorant, rubbing resistance improves. Only one kind of colorant may be used, or two or more kinds of colorants may be used.

The colorant includes one or more of a pigment or a dye. Accordingly, the colorant may include only a pigment, may include only a dye, or may include both a pigment and a dye. The pigment and the dye may each be an inorganic material, an organic material, or a mixture of an inorganic material and an organic material.

The pigment is a coloring material that is insoluble in a solvent. The pigment includes not only an inorganic material and an organic material that are insoluble in the solvent, but also a material in which an inorganic dye, an organic dye, or both are laked. The dye may be water-soluble or oil-soluble.

Specific examples of the pigment include a black pigment. Examples of the black pigment include carbon black manufactured by one or more of a furnace method, a channel method, or a thermal method, and also include acetylene black, Ketjen black, and lamp black. Further, the black pigment may be: a material in which the above-described black pigment is adjusted or coated by an epoxy resin; a material obtained by subjecting the above-described black pigment to a process of dispersing it in a resin in a solvent in advance and coating the above-described black pigment with a resin within a range from 20 mg/g to 200 mg/g both inclusive; a material in which the above-described black pigment is subjected to an acidic surface treatment or an alkaline surface treatment; carbon black having an average particle size of 8 nm or greater and a DBP oil absorption amount of 90 ml/100 g or less; or carbon black having a total oxygen amount per a surface area of 100 m² of 9 mg or greater where the total oxygen amount is calculated from carbon monoxide (CO) and carbon dioxide (CO₂) in a portion volatilized at 950°C. Further, the black pigment may be graphitized carbon black, graphite, activated carbon, carbon fibers, carbon nanotubes, carbon microcoils, carbon nanohorns, a carbon aerogel, a fullerene, aniline black, Pigment Black 7, titanium black, or the like.

In addition, specific examples of the pigment include colored pigments of an organic pigment and an inorganic pigment, and the color of each of the colored pigments is a color other than black. Specific examples of the organic pigment and the inorganic pigment include chromium oxide green, miloli blue, cobalt green, cobalt blue, manganese-based, ferrocyanide, phosphoric acid salt ultramarine blue, dark blue, ultramarine, cellulian blue, pyridian, emerald green, lead sulfate, yellow lead, zinc yellow, Bengala (red iron oxide (III)), cadmium red, synthetic iron black, amber, and a lake pigment.

Among them, the pigment is preferably a black pigment, and more preferably carbon black. A reason for this is that a superior light shielding property is obtainable thereby.

Note that the pigment may be a commercially available product. Specific examples of commercially available pigment include MICROPIGMO WMYW-5, MICROPIGMO WMRD-5, MICROPIGMO WMBN-5, MICROPIGMO WMGN-5, MICROPIGMO WMBK-5, MICROPIGMO WMBE-5, MICROPIGMO WMVT-5, MICROPIGMO WMWE-1, BONJET BLACK CW-1 (all available from Orient Chemical Industries Co., Ltd.), Pigment Red 1, 2, 3, 9, 10, 14, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 254, 228, 240, and 254, Pigment Orange 13, 31, 34, 36, 38, 43, 46, 48, 49, 51, 52, 55, 59, 60, 61, 62, 64, 65, and 71, Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185, Pigment Green 7, 10, 36, and 58, Pigment Blue 15, 15:1, 15:2, 15:3, 15:4, 15:5, 15:6, 22, 24, 56, 60, 61, 62, and 64, and Pigment Violet 1, 19, 23, 27, 29, 30, 32, 37, 40, and 50.

Specific examples of the dye include a metal complex compound. Specific examples of the metal complex compound include a nitroso compound, a nitro compound, an azo compound, a diazo compound, a xanthene compound, a quinoline compound, an anthraquinone compound, a coumarin compound, a cyanine compound, a phthalocyanine compound, an isoindolinone compound, an isoindolin compound, a quinacridone compound, an anthanthrone compound, a perinone compound, a perylene compound, a diketopyrrolopyrrole compound, a thioindigo compound, a dioxazine compound, a triphenylmethane compound, a quinophthalone compound, a naphthalenetetracarboxylic acid, an azo dye, and a cyanine dye.

Note that the dye may be a commercially available product. Specific examples of a commercially available dye include WATER YELLOW 1, WATER YELLOW 2, WATER YELLOW 6C, WATER YELLOW 6CL, WATER ORANGE 18, WATER ORANGE 25, WATER RED 1, WATER RED 2S, WATER RED 3, WATER RED 9, WATER RED 27, WATER PINK 2S, WATER BROWN 16, WATER GREEN 8, WATER BLUE 3, WATER BLUE 9, WATER BLUE 105S, WATER BLUE 106, WATER BLUE 117-L, WATER VIOLET 7, WATER BLACK 31, WATER BLACK 191-L, WATER BLACK 256-L, WATER BLACK R-455, WATER BLACK R-510, BONJET YELLOW 161-L, BONJET MAGENTA XXX, BONJET CYAN XXX, BONJET BLACK 891-L, VALIFAST YELLOW 1101, VALIFAST YELLOW 3150, VALIFAST RED 1308, VALIFAST RED 2320, VALIFAST PINK 1364, VALIFAST PINK 2310N, VALIFAST VIOLET 1701, VALIFAST BLACK 1815, VALIFAST BLACK 1807, VALIFAST BLACK 3804, VALIFAST BLACK 3810, VALIFAST BLACK 3820, VALIFAST BLACK 3830, VALIFAST BLACK 3840, VALIFAST BLACK 3866, VALIFAST BLACK 3870, VALIFAST ORANGE 2210, VALIFAST BROWN 3402, VALIFAST BLUE 1613, VALIFAST BLUE 1605 (all available from Orient Chemical Industries Co., Ltd.), Acid Green 1, Acid Green 3, Acid Green 5, Acid Green 9, Acid Green 27, Acid Green 50, Acid Green A, Alizarin Cyanin Green F, Basic Green 1, Basic Green 5, Bromocresol Green, Bromocresol Green Sodium Salt, Erio Green B, Fast Green FCF, Fiter Blue Green Sodium Salt, Indocyanine Green, Janus Green B, Leuco Malachite Green, Malachite Green, Oxalate, Methyl Green, Palatine Chrome Green, Quinizarin Green SS, Acid Red 1, Acid Red 9, Acid Red 13, Acid Red 18, Acid Red 26, Acid Red 27, Acid Red 52, Acid Red 87, Acid Red 88, Acid Red 91, Acid Red 92, Acid Red 94, Acid Red 112, Acid Red 114, Acid Red 151, Acid Red 289, Alizarin, Allura Red AC, Astrazon Red 6B, Azo Rubine, Basic Red 5, Benzopurpurine 4B, Bordezux Red, Chlorantine Fast Red 5B, Chromotrope 2B, Chromotrope 2R, Congo Red, Cresol Red, Crezol Red Sodium Salt, Crocein Scarlet 3B, Direct Fast Red 3B, Direct Red 80, Direct Scarlet B, Eriochrome Red B, 4-Ethoxychrysoidine Hydrochloride, Ethyl Red, Fast Red B Salt, Fast Red ITR Base, Lake Red CBA, Lithol Rubin BCA, Methoxy Red, Methyl Red, Methyl Red Sodium Salt, Oralith Brilliant Pink R, Para Red, Phenol Red Sodium Salt, Pigment Red, Pigment Red 254, Rhodamine 6G, Sudan II, Sudan III, Sudan R, 2,3,5-Triphenyltetrazolium Chloride, Acid Black 1, Acid Blue 1, Acid Blue 9, Acid Blue 92, Acid Blue 3 Sodium Salt, Acid Red 91, Azo Blue, Basic Blue 1, Basic Blue 7, Basic Blue 12, Basic Blue 17, Basic Blue 24, Basic Blue 26, Briliant Blue G, Brilliant Blue R, Bromocresol Blue, Bromophenol Blue, Bromothymol Blue, Chrome Pure Blue BX, Coomassie Brilliant Blue G-250, Coomassie Brilliant Blue R-250, Direct Blue 1, Direct Blue 2, Direct Blue 14, Direct Sky Blue, Disperse Blue 14, Eriochrome Blue Black B, Eriochrome Cyanine R, Evans Blue, Filter Blue Green Sodium Salt, Indigo Carmine, Indigo, Methylene Blue Hydrate, Mordant Black 17, Mordant Blue 13, Mordant Blue 29, Omega Chrome Black Blue G, Pigment Blue 15, Quinizarin Blue, Sudan Blue, Thymol Blue, Xylene Cyanol FF, Acid Orange 5, Acid Orange 7, 1-Amino-2-methylanthraquione, Astrazon Orange R, Basic Orange 14, Crocein Orange G, Ethyl Orange, Methyl Orange, Mordant Orange 1, α-Naphtol Orange, Oil Orange, Orange G, Permanent Orange, Pyrazolone Orange, Sudan I, and Sudan II (all available from Tokyo Chemical Industry Co., Ltd.).

### (Water-soluble Leveling Agent)

Further, the other component includes a water-soluble leveling agent. The water-soluble leveling agent is a water-soluble component (a component which dissolves by 0.1 mass% or more in water at 25°C) that improves the coatability of the polymerizable composition. Only one kind of water-soluble leveling agent may be used, or two or more kinds of water-soluble leveling agents may be used. Specific examples of the water-soluble leveling agent are not particularly limited. Hereinafter, the "water-soluble leveling agent" is simply referred to as a "leveling agent" for convenience.

A soluble property (a solubility) of the leveling agent in an aqueous solvent is not particularly limited. The solubility is preferably 0.5 mass% or higher, more preferably 1.0 mass% or higher, and still more preferably 5.0 mass% or higher, in water at 25°C, in particular. A reason for this is that this improves the storage stability of the polymerizable composition, and therefore helps to prevent over-time sedimentation and precipitation of a solid content in the polymerizable composition. Another reason for this is that this improves the curability of the polymerizable composition.

### (Water-soluble Monofunctional Acrylic Acid Ester Compound)

Further, the other component includes a water-soluble monofunctional acrylic acid ester compound. The water-soluble monofunctional acrylic acid ester compound is a water-soluble component (a component which dissolves by 0.1 mass% or more in water at 25°C) that improves the curability of the polymerizable composition. Only one kind of water-soluble monofunctional acrylic acid ester compound may be used, or two or more kinds of water-soluble monofunctional acrylic acid ester compounds may be used. Specific examples of the water-soluble monofunctional acrylic acid ester compound include methoxypolyethylene glycol monoacrylate. Hereinafter, the "water-soluble monofunctional acrylic acid ester compound" is simply referred to as a "monofunctional acrylic acid ester compound" for convenience.

A soluble property (a solubility) of the monofunctional acrylic acid ester compound in an aqueous solvent is not particularly limited. The solubility is preferably 0.5 mass% or higher, more preferably 1.0 mass% or higher, and still more preferably 5.0 mass% or higher, in water at 25°C, in particular. A reason for this is that this improves the storage stability of the polymerizable composition, and therefore helps to prevent over-time sedimentation and precipitation of a solid content in the polymerizable composition. Another reason for this is that this improves the curability of the polymerizable composition.

### (Organic Solvent)

Further, the other component includes an organic solvent. The term "organic solvent" described here is a generic term for solvents other than the aqueous solvents described above. The organic solvent is not particularly limited in kind, and specific examples thereof include ketones, an ether-based solvent, an ester-based solvent, a cellosolve-based solvent, an alcohol-based solvent (excluding an alcohol-based solvent belonging to the aqueous solvent), an ether-ester-based solvent, a BTX-based solvent, an aliphatic-hydrocarbon-based solvent, a terpene hydrocarbon oil, a halogenated-aliphatic-hydrocarbon-based solvent, and a halogenated-aromatic-hydrocarbon-based solvent.

Examples of the ketones include methyl ethyl ketone, acetone, and cyclohexanone. Examples of the ether-based solvent include oxane, tetrahydrofuran, and 1,2-dimethoxyethane. Examples of the ester-based solvent include methyl acetate, ethyl acetate, and propyl acetate. Examples of the cellosolve-based solvent include ethylene glycol monomethyl ether and ethylene glycol monoethyl ether. Examples of the alcohol-based solvent include methanol and ethanol. Examples of the ether-ester-based solvent include ethylene glycol monomethyl acetate and ethylene glycol monoethyl acetate. Examples of the BTX-based solvent include benzene, toluene, and xylene. Examples of the aliphatic-hydrocarbon-based solvent include hexane, heptane, octane, and cyclohexane. Examples of the terpene hydrocarbon oil include turpentine oil, D-limonene, and pinene. Examples of the halogenated-aliphatic-hydrocarbon-based solvent include carbon tetrachloride, chloroform, trichloroethylene, methylene chloride, and 1,2-dichloroethane. Examples of the halogenated-aromatic-hydrocarbon-based solvent include chlorobenzene. In addition, examples of the organic solvent may include aniline, triethylamine, pyridine, acetic acid, acetonitrile, carbon disulfide, N,N-dimethylformamide, N,N-dimethylacetamide, N-methylpyrrolidone, and dimethyl sulfoxide.

A content of the organic solvent in the polymerizable compound is not particularly limited; however, the content is preferably 5 mass% or less, more preferably 3 mass% or less, and still more preferably 1 mass% or less, in particular. A reason for this is that this reduces an environmental impact upon the use of the polymerizable composition.

### [Manufacturing Method]

In a case of manufacturing the polymerizable composition, the monofunctional acrylamide compound, the photoradical initiator, and the photosensitizer are put into the aqueous solvent, following which the aqueous solvent is stirred. In this case, the polyfunctional acrylamide compound, the polyfunctional acrylic acid ester compound, or both may further be added in the aqueous solvent, or the colorant may further be added in the aqueous solvent. Thus, the monofunctional acrylamide compound, the photoradical initiator, and the photosensitizer are each dispersed or dissolved in the aqueous solvent. As a result, the polymerizable composition is obtained.

### [Action and Effects]

According to the polymerizable composition, the monofunctional acrylamide compound, the photoradical initiator, and the photosensitizer are included in the aqueous solvent. In this case, firstly, the storage stability and the coatability of the polymerizable composition improve. Secondly, the curability of the film (the cured material) improves, because the polymerization (curing) reaction of the monofunctional acrylamide compound proceeds sufficiently. Thirdly, adherence of the film to the base improves and the durability of the film improves, because a dense and strong film is formed with use of the polymerizable composition. Thus, the durability and the adherence of the film improve while the storage stability and the coatability of the polymerizable composition are secured. Accordingly, it is possible to obtain a superior physical property.

This makes it possible to form a film that is highly photosensitive with respect to long-wavelength light applied from a light source typified by an LED (light-emitting diode) light source, more specifically, ultraviolet light (having a wavelength within a range from 360 nm to 405 nm both inclusive).

In particular, the monofunctional acrylamide compound may include the compound represented by Formula (1). This improves the coatability and the curability of the polymerizable composition, and also improves the dispersibility of the solid content in the polymerizable composition. Accordingly, it is possible to achieve higher effects. In this case, the monofunctional acrylamide compound may include 4-acryloylmorpholine. This further improves each of the coatability, the curability, and the dispersibility. Accordingly, it is possible to achieve even higher effects.

Moreover, the solubility of the photoradical initiator may be higher than or equal to 1 mass% in water at 25°C. This improves the storage stability of the polymerizable composition. Accordingly, it is possible to achieve higher effects.

Moreover, the photoradical initiator may include the compound represented by Formula (2). This secures the storage stability and the curability of the polymerizable composition. Accordingly, it is possible to achieve higher effects.

Moreover, the photosensitizer may include the compound represented by Formula (3). This improves the photosensitivity of the photosensitizer, and also improves the soluble property and the curability of the polymerizable composition. Accordingly, it is possible to achieve higher effects. In this case, in Formula (3), Z11 may be >C=O and Z12 may be -S-. This improves the curability of the polymerizable composition. Accordingly, it is possible to achieve even higher effects.

Moreover, the polymerizable composition may further include the polyfunctional acrylamide compound, the polyfunctional acrylic acid ester compound, or both. This improves the curability of the polymerizable composition. Accordingly, it is possible to achieve higher effects. In this case, the polyfunctional acrylamide compound may include the compound represented by Formula (5). This improves the curability of the polymerizable composition, and also improves the dispersibility of the solid content in the polymerizable composition. Accordingly, it is possible to achieve higher effects. Further, the total content of the polyfunctional acrylamide compound and the polyfunctional acrylic acid ester compound may be greater than or equal to 1 mass%. This improves the curability of the polymerizable composition. Accordingly, it is possible to achieve higher effects.

Further, the polymerizable composition may further include the colorant. This allows for coloring of the polymerizable composition in a desired color, and improves the rubbing resistance of the film formed with use of the polymerizable compound including the colorant. Accordingly, it is possible to achieve higher effects.

### <2. Cured Material and Method of Manufacturing Cured Material>

Next, a description is given of a cured material of an embodiment of the present invention using the above-described polymerizable composition and a method of manufacturing such a cured material of an embodiment of the present invention.

### [Configuration]

The cured material to be described here is a cured product of the polymerizable compound as described above, more specifically, a product formed by subjecting the monofunctional acrylamide compound to a photoradical polymerization reaction with use of the photoradical initiator. Accordingly, the polymerizable compound is applied on a surface of a base, following which the applied polymerizable compound is subjected to the photoradical polymerization reaction. This forms a film including the cured product (the cured material) of the polymerizable compound on the surface of the base.

### [Manufacturing Method]

In a case of manufacturing the cured material, first, the polymerizable compound is prepared by the above-described procedure. Thereafter, the polymerizable compound is applied on the surface of the base, following which the applied polymerizable compound is dried. As a result, a coating film including the polymerizable composition is formed on the surface of the base.

The base is not particularly limited in kind. To give an example, the base includes one or more of metal, wood, rubber, plastic, glass, ceramic, paper, or cloth. A method of applying the polymerizable compound is not particularly limited, and examples thereof include spin coating, bar coating, roll coating, curtain coating, various printing methods, and an immersion method.

Lastly, the coating film is irradiated with an active energy ray. The active energy ray is not particularly limited in kind, and examples thereof include ultraviolet light using a light-emitting diode (LED) as a light source. Irradiation conditions including, without limitation, a wavelength, irradiation intensity, and an irradiation time of the ultraviolet light may be freely set.

Examples of the irradiation conditions include the followings. The wavelength is within a range from 200 nm to 405 nm both inclusive. The irradiation intensity is within a range from 1 mW/cm to 500 mW/cm both inclusive, and preferably within a range from 5 mW/cm to 300 mW/cm both inclusive. Converted into an irradiation amount, the irradiation intensity is within a range from 10 mJ/cm² to 1000 mJ/cm² both inclusive, and preferably within a range from 100 mJ/cm² to 500 mJ/cm² both inclusive. The irradiation time is within a range from 1 second to 500 seconds both inclusive, and preferably within a range from 5 seconds to 300 seconds both inclusive.

In this case, the photoradical initiator is decomposed in accordance with the irradiation of the active energy ray (here, the ultraviolet light), which results in generation of a radical. Thus, an addition polymerization reaction of the polymerizable composition (the monofunctional acrylamide compound) proceeds due to the generation of the radical, and therefore, a cured product (a cured material) of the polymerizable compound is formed. As a result, a film including the cured material is formed.

Note that in a case of forming a film, the above-described procedure of forming the film may be repeated to stack two or more films on each other.

### [Action and Effects]

According to this cured material, the cured material is a cured material of the polymerizable composition, and the polymerizable composition has the above-described configuration. Accordingly, for reasons similar to those in the case described in relation to the polymerizable composition, the resistance and the adherence are improved. As a result, it is possible to obtain a superior physical property. Note that other action and effects related to the cured material are similar to the other action and effects related to the polymerizable composition.

Moreover, according to the method of manufacturing the cured material, the polymerizable composition is irradiated with the active energy ray, and therefore, the photoradical polymerization reaction of the monofunctional acrylamide compound proceeds stably, sufficiently, and stably in accordance with the irradiation of the active energy. This makes it possible to obtain the cured material having the superior physical property described above.

In this case, in particular, in order to obtain the cured material having the superior physical property, it is sufficient that only a process of irradiating the polymerizable composition with the active energy ray is performed. In addition, the necessary amount of irradiation of the active energy ray with respect to the polymerizable compound is small. Therefore, it is possible to easily and stably manufacture the cured material having the superior physical property. Specifically, advantages in the following points and the like are obtainable: that the process of manufacturing the cured product is shortened; that a damage on the base is suppressed; and that patterning (so manufacturing the cured material as to provide a desired pattern) is allowed.

Further, as described above, the film (the cured material) that is highly photosensitive to the ultraviolet light having a wavelength within a range from 360 nm to 405 nm both inclusive is formed. This makes it possible to use the LED as the light source and also to reduce an environmental impact.

### <3. Uses (Vehicle, etc.)>

Uses of the polymerizable composition and the cured material described above are not particularly limited, and examples thereof include various lenses, various films, and various functional films.

Specifically, examples thereof include eye glasses, an imaging lens, an antistatic film, an optical film, an electrically conductive film, a protective film, a heat-ray blocking material, a transfer foil, a printing plate, an insulating varnish, an insulating sheet, a laminated plate, a printed circuit board, a substrate for a flexible display, a substrate for a touch panel, a mask for printing, a molding material, putty, a building material, a nail art material, cosmetics, siding, a glass fiber impregnation agent, a filler agent, passivation films for a semiconductor, a solar cell, and the like, an interlayer insulating film, a protective covering film, a prismatic lens sheet for a backlight of a liquid crystal display, a Fresnel lens sheet for a screen of a projection television, a lens unit of a lens sheet for a lenticular lens sheet, a backlight using any of the above-described sheets, a protective film and a spacer for a liquid crystal color filter, a DNA separation chip, a microreactor, a nano-bio device, a recording material for a hard disk, a solid-state imaging device, a solar panel, a light-emitting diode, an organic light-emitting device, an electrode protective material, a luminescent film, a fluorescent film, an MEMS device, an actuator, a hologram, a plasmon device, a polarizing plate, a polarizing film, an alignment film, a microlens, an optical device, a retardation film, an optical connector, an optical waveguide, a casting agent for optical shaping, food, a beverage container, a packaging material for food, a dental material, a sanitary ware, and a housing equipment. Examples of the housing equipment include a bathtub.

In particular, in a case where the polymerizable composition includes the colorant such as the pigment as described above, the dispersibility of the colorant in the polymerizable composition improves. Therefore, the polymerizable composition is preferably used as a vehicle for an ink. The vehicle using the polymerizable composition is a vehicle according to an embodiment of the present invention. Accordingly, the storage stability and the curability of the polymerizable composition improve due to the improvement of the dispersibility of the colorant in the polymerizable composition. The polymerizable composition is therefore preferably used as an ink composition.

### Examples

Examples of the present invention are described in detail below.

### (Experiment Examples 1 to 30)

First, by the following procedure, the polymerizable composition was prepared and a film (a cured material) was manufactured using the prepared polymerizable composition, following which the respective physical properties of the polymerizable composition and the film were evaluated.

### [Preparation of Polymerizable Composition]

The monofunctional acrylamide compound, the photoradical initiator, the photosensitizer, and 0.375 parts by mass of the leveling agent were added to 246 parts by mass of an aqueous solvent (ion-exchanged water), following which the aqueous solvent was stirred. The kind and the mixed amount (parts by mass) of each of the monofunctional acrylamide compound, the photoradical initiator, and the photosensitizer were as listed in Tables 1 to 3.

As the monofunctional acrylamide compound, the compound represented by A1 (ACMO), the compound represented by A2 (HEAA), the compound represented by A3 (DMAA), and the compound represented by A4 (DEAA) were used.

As the photoradical initiator, N,N-bis(2-hydroxyethyl)butane-1-aminium=phenyl(2,4,6-trimethylbenzoyl)phosphinat e (NNP) was used.

As the photosensitizer, N,N-bis(2-hydroxyethyl)butane-1-aminium=9-oxo-9Hthioxanthene-4-carboxylate (NNC) was used.

As the leveling agent, a polyether-modified polysiloxane copolymer TEGO glide 100 available from Evonik Industries AG was used.

In this case, the polyfunctional acrylamide compound, the polyfunctional acrylic acid ester compound, and the monofunctional acrylic acid ester compound were further added to the aqueous solvent on an as-needed basis. The kind and the mixed amount (parts by mass) of each of the polyfunctional acrylamide compound, the polyfunctional acrylic acid ester compound, and the monofunctional acrylic acid ester compound were as listed in Tables 1 to 3.

As the polyfunctional acrylamide compound, a compound represented by D1 (FAM1), a compound represented by D2 (FAM2), and a compound represented by D3 (AAMU) were used.

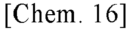

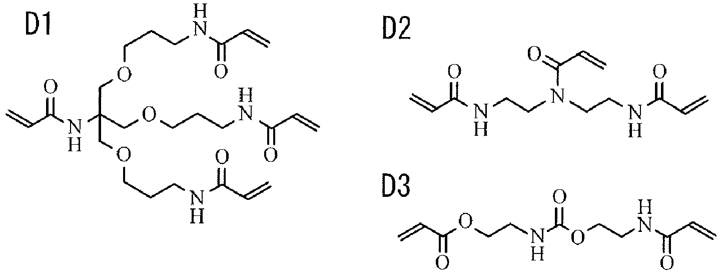

As the polyfunctional acrylic acid ester compound, ethylene-oxide-modified polyglycerin polyacrylate SA-TE60 (EOPG) available from Sakamoto Yakuhin Kogyo Co., Ltd. was used.

As the monofunctional acrylic acid ester compound, methoxypolyethylene glycol monoacrylate AM-90G (MPEG) available from Shin-Nakamura Chemical Co., Ltd. was used.

The monofunctional acrylamide compound, the photoradical initiator, and the photosensitizer were each thereby dispersed or dissolved in the aqueous solvent. As a result, the polymerizable composition was prepared.

Note that for comparison, a polymerizable composition was prepared by a similar procedure except that the monofunctional acrylamide compound, the photosensitizer, or both were not used. In a case where both the monofunctional acrylamide compound and the photosensitizer were used, a solid concentration of the polymerizable composition was set to 30.2%. In a case where only the monofunctional acrylamide compound was not used, the solid concentration of the polymerizable composition was set to 30.2%. In a case where only the photosensitizer was not used, the solid concentration of the polymerizable composition was set to 30.0%. In a case where neither the monofunctional acrylamide compound nor the photosensitizer was used, the solid concentration of the polymerizable composition was set to 30.0%.

### [Manufacture of Cured Material]

The polymerizable composition was applied on a surface of a base by means of a coating instrument (a bar coater), following which the polymerizable composition was dried at a drying temperature of 60°C and for a drying time of 6 minutes. Thus, a coating film of the polymerizable composition was formed. As the base, a polyvinyl chloride (PVC) plate (Takiron Plate ESS8800A available from C.I. TAKIRON Corporation) and a glass plate (EAGLE XG available from Corning Incorporated) were used. Thereafter, the coating film was irradiated with a tack-free lowest-dose active energy ray (ultraviolet light having a wavelength of 395 nm) using LEDs as a light source. The monofunctional acrylamide compound thereby underwent a photoradical polymerization reaction with use of the photoradical initiator in the polymerizable composition. As a result, a film including a cured material (a cured product of the monofunctional acrylamide compound) was formed.

### [Evaluation of Physical Property]

Evaluation of the respective physical properties (coatability and discharge stability) of the polymerizable compositions and the respective physical properties (curability, water resistance, and adherence) of the cured materials revealed the results described in Tables 1 to 3.

In a case of examining the coatability, when a coating film was formed using a PVC plate as a base, a state (appearance) of the coating film was visually observed to determine the state of the coating film. Specifically, a case where the polymerizable composition was not repelled and the state of the coating film was therefore uniform was determined as A. In contrast, a case where the polymerizable composition was repelled and the state of the coating film was therefore non-uniform was determined as B.

In a case of examining the curability, a film was formed using a glass plate as a base, following which a cured state of the film was determined by touching. Specifically, a case where the polymerizable composition was sufficiently cured and the film was not sticky was determined as A. In contrast, a case where the polymerizable composition was not sufficiently cured, i.e., was uncured, and the film was sticky was determined as B.

In a case of examining the water resistance, a film was formed using a glass plate as a base, following which the glass plate with the formed film was impregnated with ion-exchanged water for an impregnation time of 1 minute. Thereafter, a state of the film after the impregnation was visually observed to determine the state of the film. Specifically, a case where the film was not dissolved was determined as A. In contrast, a case where the film was dissolved was determined as B.

In a case of examining the adherence, first, a film was formed using a PVC plate as a base, following which a cross-shaped cut was made on the surface of the film by means of a cutter. Thereafter, an adhesive tape (Cellotape (registered trademark) CT-18 available from Nichiban Co., Ltd.) was attached to the surface of the film, following which the adhesive tape was peeled off fast. Lastly, a state of the film after peeling off the adhesive tape was visually observed to thereby determine the state of the film. Specifically, a case where the film was not peeled off was determined as A. In contrast, a case where a portion or all of the film was peeled off was determined as B.

In a case of examining the discharge stability, upon discharging the polymerizable composition by means of an ink-jet apparatus, whether a discharge operation, which had been once stopped without capping, cleaning, etc., was resumed without any problem was observed to determine a discharge state of the polymerizable composition. As the ink-jet apparatus, an ink-jet apparatus (a one-nozzle patterning apparatus for basic research LaboJet-600 Standard (ink-jet head model number: IJHD-1000)) available from MICROJET Corporation was used. Specifically, a case where a discharge direction of the polymerizable composition did not shift and a discharge amount of the polymerizable composition (a weight of discharged droplets) did not change, and therefore, the discharge state was stable was determined as A. A case where the discharge direction of the polymerizable composition shifted slightly and the discharge amount of the polymerizable composition changed slightly, but the discharge state was stable within an acceptable range was determined as B. A case where the discharge direction of the polymerizable composition shifted greatly and the discharge amount of the polymerizable composition changed greatly (clogging due to the polymerizable composition occurred), and therefore, the discharge state was unstable was determined as C.

**[Table 1]**

| Experi ment exampl e | Monofunct ional acry lamide compound | | Photorad ical initiator | | Photosens itizer | | Polyfuncti onal acrylamid e compound | | Polyfunct ional acrylic acid ester compoun d | | Monofunct ional acrylic acid ester compound | | Coatab ility | Curabi lity | Water resista nee | Adhere nee | Discha rge stabili ty |
|---|---|---|---|---|---|---|---|---|---|---|---|---|---|---|---|---|---|
| | Kind | Mix ed amo unt | Ki nd | Mix ed amo unt | Kin d | Mixe d amou nt | Kind | Mix ed amo unt | Kin d | Mixe d amou nt | Kind | Mixe d amou nt | | | | | |
| 1 | AC MO | 90 | N NP | 5 | NN C | 1 | AA MU | 10 | - | - | - | - | A | A | A | A | A |
| 2 | AC MO | 80 | N NP | 5 | NN C | 1 | AA MU | 20 | - | - | - | - | A | A | A | A | A |
| 3 | AC MO + HEA A + DM AA | 80 + 5 + 5 | N NP | 5 | NN C | 1 | AA MU | 10 | - | - | - | - | A | A | A | A | - |
| 4 | AC MO + HEA A + DEA A | 80 + 5 + 5 | N NP | 5 | NN C | 1 | AA MU | 10 | - | - | - | - | A | A | A | A | - |
| 5 | AC MO + DM AA + DEA A | 80 + 5 + 5 | N NP | 5 | NN C | 1 | AA MU | 10 | - | - | - | - | A | A | A | A | - |
| 6 | AC MO | 70 | N NP | 5 | NN C | 1 | AA MU | 30 | - | - | - | - | A | A | A | A | A |
| 7 | AC MO | 90 | N NP | 5 | NN C | 1 | - | - | - | - | MPE G | 10 | A | A | A | A | A |
| 8 | AC MO | 90 | N NP | 5 | NN C | 1 | - | - | - | - | MPE G | 20 | A | A | A | A | A |

**[Table 2]**

| Experi ment exampl e | Monofunct ional acry lamide compound | | Photorad ical initiator | | Photosens itizer | | Polyfuncti onal acrylamid e compound | | Polyfunct ional acrylic acid ester compoun d | | Monofunct ional acrylic acid ester compound | | Coatab ility | Curabi lity | Water resista nee | Adhere nee | Discha rge stabili ty |
|---|---|---|---|---|---|---|---|---|---|---|---|---|---|---|---|---|---|
| | Kind | Mix ed amo unt | Ki nd | Mix ed amo unt | Kin d | Mixe d amou nt | Kind | Mix ed amo unt | Kin d | Mixe d amo unt | Kind | Mixe d amou nt | | | | | |
| 9 | AC MO | 70 | N NP | 5 | NN C | 1 | - | - | - | - | MPE G | 30 | A | A | A | A | A |
| 10 | AC MO + HEA A | 45 + 45 | N NP | 5 | NN C | 1 | - | - | - | - | MPE G | 10 | A | A | A | A | A |
| 11 | AC MO + DM AA | 45 + 45 | N NP | 5 | NN C | 1 | - | - | - | - | MPE G | 10 | A | A | A | A | - |
| 12 | AC MO + DEA A | 45 + 45 | N NP | 5 | NN C | 1 | - | - | - | - | MPE G | 10 | A | A | A | A | - |
| 13 | AC MO | 90 | N NP | 5 | NN C | 1 | FAM 1 | 10 | - | - | - | - | A | A | A | A | A |
| 14 | AC MO | 90 | N NP | 5 | NN C | 1 | FAM 2 | 10 | - | - | - | - | A | A | A | A | A |
| 15 | AC MO | 80 | N NP | 5 | NN C | 1 | AA MU | 10 | - | - | MPE G | 10 | A | A | A | A | - |
| 16 | AC MO | 80 | N NP | 5 | NN C | 1 | - | - | EO PG | 10 | MPE G | 10 | A | A | A | A | - |

**[Table 3]**

| Experi ment exampl e | Monofunct ional acry lamide compound | | Photorad ical initiator | | Photosens itizer | | Polyfuncti onal acrylamid e compound | | Polyfunct ional acrylic acid ester compoun d | | Monofunct ional acrylic acid ester compound | | Coatab ility | Curabi lity | Water resista nee | Adhere nee | Discha rge stabili ty |
|---|---|---|---|---|---|---|---|---|---|---|---|---|---|---|---|---|---|
| | Kind | Mixe d amo unt | Ki nd | Mix ed amo unt | Kin d | Mixe d amou nt | Kind | Mix ed amo unt | Kin d | Mixe d amo unt | Kind | Mixe d amou nt | | | | | |
| 17 | AC MO | 100 | N NP | 5 | - | - | - | - | - | - | - | - | A | B | B | A | A |
| 18 | AC MO | 90 | N NP | 5 | - | - | AA MU | 10 | - | - | - | - | A | B | B | A | A |
| 19 | AC MO | 80 | N NP | 5 | - | - | AA MU | 20 | - | - | - | - | A | B | B | B | A |
| 20 | AC MO | 90 | N NP | 5 | - | - | - | - | EO PG | 10 | - | - | A | B | B | A | - |
| 21 | AC MO | 80 | N NP | 5 | - | - | - | - | EO PG | 20 | - | - | A | B | B | B | - |
| 22 | AC MO | 90 | N NP | 5 | - | - | - | - | - | - | MPE G | 10 | A | B | B | A | A |
| 23 | AC MO | 80 | N NP | 5 | - | - | - | - | - | - | MPE G | 20 | A | B | B | B | A |
| 24 | AC MO | 80 | N NP | 5 | - | - | AA MU | 10 | EO PG | 10 | - | - | A | B | B | B | - |
| 25 | AC MO | 80 | N NP | 5 | - | - | AA MU | 10 | - | - | MPE G | 10 | A | B | B | B | - |
| 26 | - | - | N NP | 5 | NN C | 1 | - | - | - | - | MPE G | 100 | A | B | B | B | - |
| 27 | - | - | N NP | 5 | NN C | 1 | - | - | EO PG | 100 | - | - | A | B | B | B | - |
| 28 | - | - | N NP | 5 | NN C | 1 | FAM 1 | 100 | - | - | - | - | B | - | - | - | - |
| 29 | - | - | N NP | 5 | NN C | 1 | FAM 2 | 100 | - | - | - | - | B | - | - | - | - |
| 30 | - | - | N NP | 5 | - | - | - | - | - | - | MPE G | 100 | A | B | B | B | - |

### [Discussion]

As described in Tables 1 to 3, the respective physical properties of the polymerizable composition and the cured material varied greatly depending on the configuration of the polymerizable composition.

Specifically, in a case where the polymerizable composition did not include all the monofunctional acrylamide compound, the photoradical initiator, and the photosensitizer as a set (Experiment examples 17 to 30), favorable results were obtained only in terms of some of the coatability, the curability, the water resistance, the adherence, and the discharge stability.

In contrast, in a case where the polymerizable composition included all the monofunctional acrylamide compound, the photoradical initiator, and the photosensitizer as a set (Experiment examples 1 to 16), favorable results were obtained in terms of all the coatability, the curability, the water resistance, the adherence, and the discharge stability.

### (Experiment Examples 31 to 58)

Next, in order to check effectiveness of uses of the polymerizable composition, an ink composition using the polymerizable composition as a vehicle (the polymerizable composition including a colorant) was prepared, and a film (a cured material) was manufactured using the prepared ink composition, following which a physical property of the manufactured film was evaluated by the following procedure.

### [Preparation of Ink Composition]

An additional aqueous solvent (ion-exchanged water) and a colorant (a pigment) were added to each of the polymerizable compositions of Experiment examples 1, 7, 22, 26, and 30 described above, following which the polymerizable composition was stirred. A mixed amount (parts by mass) of the ion-exchanged water and a type and a mixed amount (parts by mass) of the colorant were as listed in Table 4.

As the colorant, used were a black color material for an ink-jet printer BONJET BLACK CW-1 (BBC) available from Orient Chemical Industries Co., Ltd., a red color material for paint MICROPIGMO WMRD-5 (MW1) available from the same, and a green color material for paint MICROPIGMO WMGN-5 (MW2) available from the same, and a blue color material for paint MICROPIGMO WMBE-5 (MW3) available from the same. A solid concentration of each of the colorants was 20%.

The colorant was thereby dispersed in the polymerizable composition. As a result, an ink composition using the polymerizable composition as a vehicle was prepared. A solid concentration of the ink composition was set to 50% in a case where the mixed amount of the additional aqueous solvent was 200 parts by mass, and to 25% in a case where the mixed amount of the additional aqueous solvent was 100 parts by mass.

### [Manufacture of Cured Material]

A film including the cured material was formed by a similar procedure except that the ink composition was used as the polymerizable composition. In this case, printing and writing paper available from Nippon Paper Industries Co., Ltd. was used as a base.

### [Evaluation of Physical Property]

Evaluation of the physical property (rubbing resistance) of the film revealed the results described in Table 4.

In a case of examining the rubbing resistance, first, a film was formed on a surface of the base, following which another base with no film was placed on the surface of the base with the film in an overlapping manner. The kind of the other base was similar to the kind of the base with the film. Thereafter, a weight of 500 g was placed on the other base, following which the base was rubbed 10 times with the other base with the weight being placed thereon. Lastly, the other base was collected, following which the surface of the other base was visually observed to determine the state of the other base. Specifically, a case where the surface of the other base did not have any film attached thereto, and was therefore not stained was determined as A. In contrast, a case where the surface of the other base had some film attached thereto, and was therefore stained was determined as B.

**[Table 4]**

| Experiment example | Colorant | | Aqueous solvent | | Polymerizable composition | Rubbing resistance |
|---|---|---|---|---|---|---|
| | Kind | Mixed amount | Kind | Mixed amount | Kind | |
| 31 | BBC | 250 | Ion -exchanged water | 200 | Experiment example 1 | A |
| 32 | MW1 | 250 | Ion-exchanged water | 200 | Experiment example 1 | A |
| 33 | MW2 | 250 | Ion-exchanged water | 200 | Experiment example 1 | A |
| 34 | MW3 | 250 | Ion-exchanged water | 200 | Experiment example 1 | A |
| 35 | BBC | 125 | Ion-exchanged water | 100 | Experiment example 1 | A |
| 36 | MW1 | 125 | Ion-exchanged water d | 100 | Experiment example 1 | A |
| 37 | MW2 | 125 | Ion-exchanged water | 100 | Experiment example 1 | A |
| 38 | MW3 | 125 | Ion-exchanged water | 100 | Experiment example 1 | A |
| 39 | BBC | 250 | Ion-exchanged water | 200 | Experiment example 7 | A |
| 40 | MW1 | 250 | Ion-exchanged water | 200 | Experiment example 7 | A |
| 41 | MW2 | 250 | Ion-exchanged water | 200 | Experiment example 7 | A |
| 42 | MW3 | 250 | Ion-exchanged water | 200 | Experiment example 7 | A |
| 43 | BBC | 125 | Ion -exchanged water | 100 | Experiment example 7 | A |
| 44 | MW1 | 125 | Ion-exchanged water | 100 | Experiment example 7 | A |
| 45 | MW2 | 125 | Ion -exchanged water | 100 | Experiment example 7 | A |
| 46 | MW3 | 125 | Ion -exchanged water | 100 | Experiment example 7 | A |
| 47 | BBC | 250 | Ion-exchanged water | 200 | Experiment example 22 | B |
| 48 | MW1 | 250 | Ion -exchanged water | 200 | Experiment example 22 | B |
| 49 | MW2 | 250 | Ion -exchanged water | 200 | Experiment example 22 | B |
| 50 | MW3 | 250 | Ion-exchanged water | 200 | Experiment example 22 | B |
| 51 | BBC | 250 | Ion -exchanged water | 200 | Experiment example 26 | B |
| 52 | MW1 | 250 | Ion -exchanged water | 200 | Experiment example 26 | B |
| 53 | MW2 | 250 | Ion-exchanged water | 200 | Experiment example 26 | B |
| 54 | MW3 | 250 | Ion -exchanged water | 200 | Experiment example 26 | B |
| 55 | BBC | 250 | Ion-exchanged water | 200 | Experiment example 30 | B |
| 56 | MW1 | 250 | Ion -exchanged water | 200 | Experiment example 30 | B |
| 57 | MW2 | 250 | Ion -exchanged water | 200 | Experiment example 30 | B |
| 58 | MW3 | 250 | Ion -exchanged water | 200 | Experiment example 30 | B |

### [Discussion]

As described in Table 4, the physical property of the film varied greatly depending on the configuration of the polymerizable composition.

Specifically, in a case where the polymerizable composition not including all the monofunctional acrylamide compound, the photoradical initiator, and the photosensitizer as a set was used as the vehicle (Experiment examples 47 to 58), favorable results were not obtained in terms of the rubbing resistance.

In contrast, in a case where the polymerizable composition including all the monofunctional acrylamide compound, the photoradical initiator, and the photosensitizer as a set was used as the vehicle (Experiment examples 31 to 46), favorable results were obtained in terms of the rubbing resistance.

### [Conclusion]

Based upon the results described in Tables 1 to 3, if the polymerizable composition included the monofunctional acrylamide compound, the photoradical initiator, and the photosensitizer together with the aqueous solvent, superior coatability and superior discharge stability were obtained. Further, the film (the cured material) obtained by irradiating the above-described polymerizable composition with the active energy ray achieved superior curability, superior water resistance, and superior adherence. Accordingly, a superior physical property of each of the polymerizable composition and the cured material was obtained, and a cured material having a superior physical property was obtained by the method of manufacturing the cured material.

Further, based upon the results described in Table 4, if the polymerizable composition further included the colorant, superior rubbing resistance of the film (the cured material) was obtained. Accordingly, a superior physical property of the cured material was obtained.

Although the present invention has been described above with reference to some embodiments and Examples, the examples of the present invention are not limited to the examples described with reference to the embodiments and Examples above and are modifiable in a variety of ways.

This application claims the priority on the basis of Japanese Patent Application No. 2019-206257 filed on November 14, 2019 with Japan Patent Office, the entire contents of which are incorporated in this application by reference.

It should be understood by those skilled in the art that various modifications, combinations, sub-combinations, and alterations may occur depending on design requirements and other factors insofar as they are within the scope of the appended claims or the equivalents thereof.

## Claims

1. A polymerizable composition comprising:
a water-soluble monofunctional acrylamide compound;
a water-soluble photoradical initiator;
a water-soluble photosensitizer; and
an aqueous solvent.

2. The polymerizable composition according to claim 1, wherein the water-soluble monofunctional acrylamide compound includes a compound represented by Formula (1), 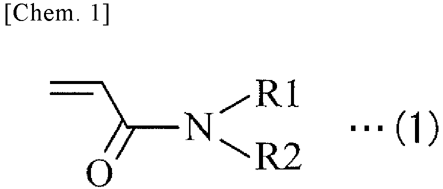 where
each of R1 and R2 is one of a hydrogen group, a straight-chain alkyl group having carbon number of greater than or equal to 1 and less than or equal to 10, a branched alkyl group having carbon number of greater than or equal to 3 and less than or equal to 10, or a hydroxyalkyl group having carbon number of greater than or equal to 1 and less than or equal to 10; R1 and R2 are bondable to each other; and each of at least one methylene group in each of R1 and R2 is substitutable by one of -O- or -S-.

3. The polymerizable composition according to claim 2, wherein the water-soluble monofunctional acrylamide compound includes 4-acryloylmorpholine.

4. The polymerizable composition according to any one of claims 1 to 3, wherein a solubility of the water-soluble photoradical initiator is higher than or equal to 1 percent by mass in water at 25 degrees Celsius.

5. The polymerizable composition according to any one of claims 1 to 4, wherein the water-soluble photoradical initiator includes a compound represented by Formula (2), 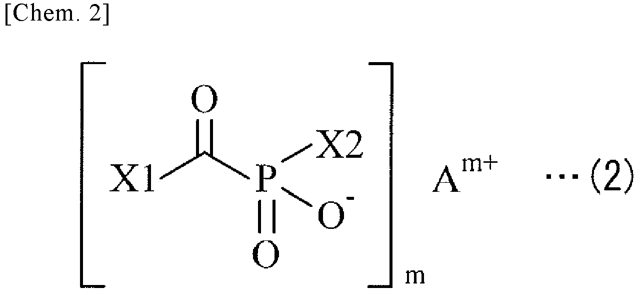 where
X1 is an aryl group having carbon number of greater than or equal to 6 and less than or equal to 15; each of at least one hydrogen group in the aryl group is substitutable by one of a straight-chain alkyl group having carbon number of greater than or equal to 1 and less than or equal to 8, a branched alkyl group having carbon number of greater than or equal to 3 and less than or equal to 8, a straight-chain halogenated alkyl group having carbon number of greater than or equal to 1 and less than or equal to 8, a branched halogenated alkyl group having carbon number of greater than or equal to 3 and less than or equal to 8, a straight-chain alkoxy group having carbon number of greater than or equal to 1 and less than or equal to 8, a branched alkoxy group having carbon number of greater than or equal to 3 and less than or equal to 8, a straight-chain halogenated alkoxy group having carbon number of greater than or equal to 1 and less than or equal to 8, or a branched halogenated alkoxy group having carbon number of greater than or equal to 3 and less than or equal to 8;
X2 is one of a straight-chain alkyl group having carbon number of greater than or equal to 1 and less than or equal to 8, a branched alkyl group having carbon number of greater than or equal to 3 and less than or equal to 8, a straight-chain alkoxy group having carbon number of greater than or equal to 1 and less than or equal to 8, a branched alkoxy group having carbon number of greater than or equal to 3 and less than or equal to 8, or an aryl group having carbon number of greater than or equal to 6 and less than or equal to 15; each of at least one hydrogen group in the aryl group is substitutable by one of a straight-chain alkyl group having carbon number of greater than or equal to 1 and less than or equal to 8, a branched alkyl group having carbon number of greater than or equal to 3 and less than or equal to 8, a straight-chain halogenated alkyl group having carbon number of greater than or equal to 1 and less than or equal to 8, a branched halogenated alkyl group having carbon number of greater than or equal to 3 and less than or equal to 8, a straight-chain alkoxy group having carbon number of greater than or equal to 1 and less than or equal to 8, a branched alkoxy group having carbon number of greater than or equal to 3 and less than or equal to 8, a straight-chain halogenated alkoxy group having carbon number of greater than or equal to 1 and less than or equal to 8, a branched halogenated alkoxy group having carbon number of greater than or equal to 3 and less than or equal to 8, a halogen group, a nitro group, a cyano group, a hydroxyl group, an amino group, a carboxyl group, a methacryloyl group, an acryloyl group, an epoxy group, a vinyl group, a vinyl ether group, a mercapto group, an isocyanate group, or a heterocycle-containing group; each of at least one methylene group in X2 is substitutable by one of -O- or -S-;
A^{m+} is one of an alkali metal ion, an alkaline earth metal ion, or N⁺HY1Y2Y3; each of Y1, Y2, and Y3 is one of a straight-chain alkyl group having carbon number of greater than or equal to 1 and less than or equal to 6, a straight-chain alkenyl group having carbon number of greater than or equal to 2 and less than or equal to 6, an aryl group having carbon number of greater than or equal to 6 and less than or equal to 15, or an arylalkyl group having carbon number of greater than or equal to 7 and less than or equal to 13; each of at least one hydrogen group in each of Y1, Y2, and Y3 is substitutable by a hydroxyl group; each of at least one methylene group in each of Y1, Y2, and Y3 is substitutable by one of -O- or -N⁺H-; any two of Y1, Y2, or Y3 are bondable to each other; and
m is an integer of greater than or equal to 1 and less than or equal to 3.

6. The polymerizable composition according to any one of claims 1 to 5, wherein the water-soluble photosensitizer includes a compound represented by Formula (3), 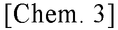 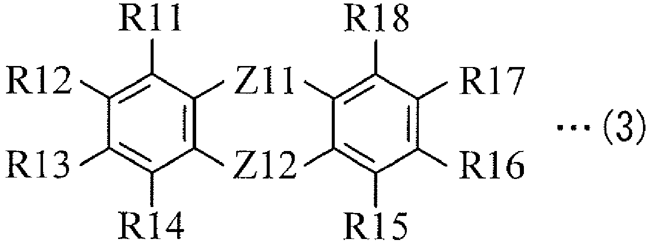 where
each of R11, R12, R13, R14, R15, R16, R17, and R18 is one of a hydrogen group, a cyano group, a nitro group, a straight-chain alkyl group having carbon number of greater than or equal to 1 and less than or equal to 20, a branched alkyl group having carbon number of greater than or equal to 3 and less than or equal to 20, an aryl group having carbon number of greater than or equal to 6 and less than or equal to 30, an arylalkyl group having carbon number of greater than or equal to 7 and less than or equal to 30, a heterocycle-containing group having carbon number of greater than or equal to 2 and less than or equal to 20, or a salt-forming-group-containing group represented by Formula (4); at least one of R11, R12, R13, R14, R15, R16, R17, or R18 is the salt-forming-group-containing group represented by Formula (4);
Z11 is one of >NR19, -O-, -S-, >S=O, or >C=O; R19 is one of a hydrogen group, a straight-chain alkyl group having carbon number of greater than or equal to 1 and less than or equal to 20, a branched alkyl group having carbon number of greater than or equal to 3 and less than or equal to 20, an aryl group having carbon number of greater than or equal to 6 and less than or equal to 30, an arylalkyl group having carbon number of greater than or equal to 7 and less than or equal to 30, or a heterocycle-containing group having carbon number of greater than or equal to 2 and less than or equal to 20; Z11 is able to be a direct bond;
Z12 is one of >CR20, >NR21, -O-, -S-, >S=O, or >C=O; and each of R20 and R21 is one of a hydrogen group, a straight-chain alkyl group having carbon number of greater than or equal to 1 and less than or equal to 20, a branched alkyl group having carbon number of greater than or equal to 3 and less than or equal to 20, an aryl group having carbon number of greater than or equal to 6 and less than or equal to 30, an arylalkyl group having carbon number of greater than or equal to 7 and less than or equal to 30, or a heterocycle-containing group having carbon number of greater than or equal to 2 and less than or equal to 20; 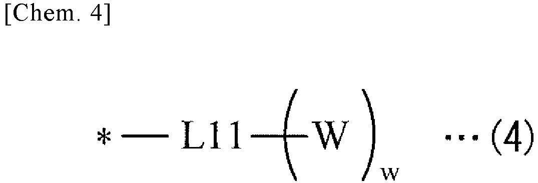
where
L11 is a (w + 1)-valent bonded group; each of at least one hydrogen group in the (w + 1)-valent bonded group is substitutable by one of a halogen group, a nitro group, a cyano group, a hydroxyl group, an amino group, a carboxyl group, a methacryloyl group, an acryloyl group, an epoxy group, a vinyl group, a vinyl ether group, a mercapto group, an isocyanate group, or a heterocycle-containing group; L11 is able to be a direct bond;
W is one of a salt of an acidic group or a salt of a basic group;
w is an integer of greater than or equal to 1 and less than or equal to 10; and "^{∗}" represents a dangling bond.

7. The polymerizable composition according to claim 6, wherein, in Formula (3), Z11 is >C=O and Z12 is -S-.

8. The polymerizable composition according to any one of claims 1 to 7, further comprising a water-soluble polyfunctional acrylamide compound, a water-soluble polyfunctional acrylic acid ester compound, or both.

9. The polymerizable composition according to claim 8, wherein the water-soluble polyfunctional acrylamide compound includes a compound represented by Formula (5), 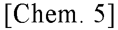 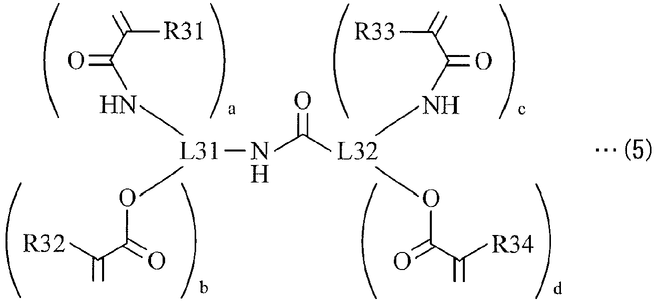 where
each of R31, R32, R33, and R34 is one of a hydrogen group or a methyl group, each of L31 and L32 is one of a straight-chain alkyl group having carbon number of greater than or equal to 1 and less than or equal to 30, a branched alkyl group having carbon number of greater than or equal to 3 and less than or equal to 30, or a heterocycle-containing group having carbon number of greater than or equal to 2 and less than or equal to 30; each of one methylene group in each of L31 and L32 is substitutable by one of -O-, -CO-, -COO-, -OCO-, -NR35-, -NR36-CO-, or -S-; each of at least one hydrogen group in each of L31 and L32 is substitutable by one of a halogen group, a nitro group, a cyano group, a hydroxyl group, an amino group, a carboxyl group, a methacryloyl group, an acryloyl group, an epoxy group, a vinyl ether group, a mercapto group, an isocyanate group, or a heterocycle-containing group having carbon number of greater than or equal to 2 and less than or equal to 30; each of R35 and R36 is one of a straight-chain alkyl group having carbon number of greater than or equal to 1 and less than or equal to 30, a branched alkyl group having carbon number of greater than or equal to 3 and less than or equal to 30, or a heterocycle-containing group having carbon number of greater than or equal to 2 and less than or equal to 30;
each of a, b, c, and d is an integer of greater than or equal to 0 and less than or equal to 5; and a + b + c + d is an integer of greater than or equal to 2.

10. The polymerizable composition according to claim 8 or 9, wherein a total content of the water-soluble polyfunctional acrylamide compound and the water-soluble polyfunctional acrylic acid ester compound is greater than or equal to 1 percent by mass.

11. The polymerizable composition according to any one of claims 1 to 10, further comprising a colorant.

12. A vehicle comprising the polymerizable composition according to any one of claims 1 to 11.

13. A cured material that is a cured product of the polymerizable composition according to any one of claims 1 to 11.

14. A method of manufacturing a cured material, the method comprising irradiating the polymerizable composition according to any one of claims 1 to 11 with an active energy ray.

15. The method of manufacturing a cured material according to claim 14, wherein the active energy ray includes ultraviolet light using a light-emitting diode (LED) as a light source.
